# EUROPÄISCHE PATENTSCHRIFT

(11) **EP 2 320 827 B1**
(45) Veröffentlichungstag und Bekanntmachung des Hinweises auf die Patenterteilung: **20.03.2013**
(21) Anmeldenummer: 09776079.7
(22) Anmeldetag: 10.08.2009
(51) Int. Cl.: A61C 5/12

(54) **ZAHNÄRZTLICHES SPREIZINSTRUMENT ZUM AUSEINANDERDRÄNGEN BENACHBARTER ZAHNSTRUKTUREN**
DENTAL SPREADING INSTRUMENT FOR FORCING APART NEIGHBOURING TOOTH STRUCTURES
INSTRUMENT ÉCARTEUR DENTAIRE, EN PARTICULIER PINCE DENTAIRE, POUR ÉCARTER DES STRUCTURES DE DENT VOISINES DANS LE CADRE DE LA CRÉATION D'UN CONTACT PROXIMAL LORS DE LA RÉALISATION D'UNE RESTAURATION DENTAIRE POSTÉRIEURE

(30) Priorität: 11.08.2008 DE 102008037115
(43) Veröffentlichungstag der Anmeldung: 18.05.2011
(73) Patentinhaber: Friedrich, Bernd A., 80337 München (DE); Bruckner, Gerhard, 80799 München (DE)
(72) Erfinder: Friedrich, Bernd A., 80337 München (DE); Bruckner, Gerhard, 80799 München (DE)
(74) Vertreter: Tesch-Biedermann, Carmen
(86) Internationale Anmeldenummer: PCT/DE2009/001129
(87) Internationale Veröffentlichungsnummer: WO 2010/017811

(56) Entgegenhaltungen:
- DE-A1-102004 035 332
- DE-B- 1 107 373
- DE-C- 837 145

## Beschreibung

### Gebiet der Erfindung

Die Erfindung bezieht sich auf ein zahnärztliches Spreizinstrument, insbesondere auf eine zahnärztliche Zange, zum Auseinanderdrängen benachbarter Zahnstrukturen im Rahmen einer Schaffung eines Approximalkontaktes bei der Anfertigung einer Seitenzahnrestauration. Gemäß einem weiteren Aspekt bezieht sich die Erfindung auf einen Formkörper, der an dem zahnärztlichen Spreizinstrument befestigbar oder befestigt ist, und der geeignet ist, um einen Bereich eines Approximalkontaktes bei einer Seitenzahnrestauration auszubilden. Gemäß einem dritten Aspekt bezieht sich die Erfindung auf ein System umfassend das zahnärztliche Spreizinstrument und eine Matrize zur Bildung einer dichten und formgebenden Wandung im Approximalraum.

### Stand der Technik

So genannte direkte plastische, zahnfarbene Restaurationen erfahren in der konservativen Füllungstherapie kariöser Zahndefekte ein zunehmend breiteres Indikationsspektrum. Dies liegt in allererster Linie an der rasanten Weiterentwicklung der hierfür angewandten Füllungswerkstoffe auf Kunststoffbasis der so genannten (Nano-, Hybrid- oder Feinstpartikel-) Komposite, die hinsichtlich ihrer Abriebfestigkeit, Dimensionsstabilität und dauerhaften Oberflächengüte in den letzten Jahren fortlaufend verbessert wurden. Gleichermaßen sind so genannte Dentinadhäsive an diesem Fortschritt beteiligt, die einen dauerhaft belastbaren Verbund dieser Komposite mit den Zahnhartsubstanzen Schmelz und Dentin gewährleisten.

Ein bisweilen entscheidender Nachteil gegenüber laborgefertigten (indirekten) Restaurationen aus z.B. einer Goldlegierung, Kunststoff oder Vollkeramik (Inlays) besteht bei den direkt (in den Zahn des Patienten) eingebrachten Kompositfüllungen in der Gestaltung eines so genannten Approximalkontaktes. Dieser wird von zwei benachbarten Zahnkronen gebildet, die sich aufgrund ihrer konvexen Kontur am Übergang zwischen dem oberen und dem mittleren Kronendrittel in einer kreisförmigen bis ovalen Kontaktfläche berühren. Diese Approximalkontakte erfüllen im natürlichen Gebiss verschiedene wichtige Funktionen, darunter insbesondere die räumliche Stabilisierung der einzelnen Zähne innerhalb des Zahnbogens sowie den Schutz des darunter befindlichen Weichgewebes (der Zahnfleischpapillen). Die Wiederherstellung eines Substanzdefektes im Zahnzwischenraumbereich, die zu den häufigsten restaurativen Maßnahmen zählt, erfordert daher auch die möglichst korrekte Neuschaffung dieser approximalen Kontaktbeziehung zur benachbarten Zahnstruktur hinsichtlich ihrer Lage, Ausdehnung und Stärke.

Im Stand der Technik werden bei der direkten Restauration eines approximalen Substanzdefektes so genannte Matrizen als unverzichtbare Hilfsmittel angewendet. Dabei handelt es sich in der Regel um 0,03 bis 0,05 mm dünne, flexible Bänder oder kleine, konvex gekrümmte Formteile (so genannte Teilmatrizen) aus Metall oder transparentem Kunststoff, die über die Defektgrenzen hinausgehend an die intakten Zahnflächen adaptiert werden, um so im Approximalraum eine dichte und formgebende Wandung zu bilden, die durch ein Restaurationsmaterial gefüllt werden kann. Im Bereich des zervikalen (unteren) Kavitätenrandes wird hierzu die Matrize mit weichen, unter Druck adaptierbaren Holzkeilen zwischen dem zu versorgenden Zahn und der benachbarten Zahnstruktur verklemmt, um so eine Abdichtung des Kavitätenbodens zu erzielen. Zur Adaption an die vertikalen, konvex gekrümmten Kavitätenränder dienen weitere Hilfsmittel wie z.B. Spannvorrichtungen, spezielle Klammern oder die individuelle Anpassung provisorischer, aushärtbarer Kunststoffe an die Außenfläche der Matrize bzw. Teilmatrize.

Im Gegensatz zur konventionellen Amalgamfüllung ist es auch bei Verwendung moderner Komposite wie hochviskoser (so genannter stopfbarer) Komposite nicht möglich, einen adäquaten Stopfdruck bei der Platzierung des Füllmaterials anzuwenden, der die Matrize reproduzierbar und somit unabhängig von den individuellen anatomischen Gegebenheiten und der Defektgeometrie an das Kontaktareal zum Nachbarzahn presst. Es gelingt somit lediglich eine einigermaßen verlässliche Annäherung der Füllungsfläche bis auf das Maß der Matrizendicke. Um eine bessere Annäherung zu erzielen, versucht man, die Matrizendicke zusätzlich durch das Auseinanderdrängen der beteiligten Zähne zu kompensieren, so dass bei Rückstellung der Zähne nach der Restauration in ihrer physiologische Ausgangsposition ein spaltfreier Kontakt resultiert. In diesem Zusammenhang wird eine besonders strenge Verkeilung vorgenommen. Alternativ zur Verkeilung werden mit einer Rändelschraube aktivierbare Spreizvorrichtungen angewandt, die - ebenfalls im Bereich der Zahnfleischpapille angesetzt - sehr große, mitunter die Hartsubstanz gefährdende Kräfte ausüben können. Daneben wird versucht, durch den Anpressdruck speziell geformter Handinstrumente auf die Matrize während des Aushärteprozesses des Füllungsmaterials eine möglichst enge Kontaktbeziehung der Füllung zu erzielen. Das Aushärten erfolgt im Allgemeinen durch Lichtpolymerisation. Die hierbei aufwendbare Kraft ist jedoch in vielen Fällen unzureichend.

Es gelingen zwar bei kompetenter Vorgehensweise und Anwendung neuerer, besonders dünner Teilmatrizen klinisch akzeptable Resultate, dennoch bleibt das Endergebnis der approximalen Kontaktbeziehung nach Aushärtung des Füllmaterials insbesondere bei größeren Defekten sehr oft unwägbar und ist meistens als suboptimal einzustufen. So ist z.B. die Forderung nach einer reproduzierbaren ovalen, großflächigeren Kontaktbeziehung im Molarenbereich (d.h. zwischen den großen Backenzähnen) nicht realisierbar, und auch die Dauerhaftigkeit des geschaffenen Kontaktes ist durch einen gewissen Verschleiß aufgrund der Eigenbeweglichkeit der Zähne in Frage gestellt.

Aus der DE 10 2004 031 427 A1 ist eine Matrize für die Zahnheilkunde bekannt, die eine verbesserte Wiederherstellung eines Approximalkontaktes zwischen benachbarten Zähne im Zuge von restaurativen Maßnahmen von Defekten erlauben soll. Bei der Matrize handelt es sich um eine Teilmatrize, an der ein lösbar angebrachter Formkörper zur Bildung des Approximalkontaktes angebracht ist. Zwar ermöglicht die offenbarte Matrize eine verbesserte Neuschaffung der approximalen Kontaktbeziehung zwischen benachbarten Zähnen hinsichtlich Lage, Ausdehnung und/oder Stärke, die zur Schaffung eines optimalen Approximalkontaktes notwendige enge Kontaktbeziehung der Füllung zur Matrize bzw. der benachbarten Zahnstruktur wird jedoch nicht optimal erreicht. Auch wird das Problem, Zahnstrukturen für einen Patienten schonend und dennoch in der richtigen Stärke und gezielt auseinanderzudrängen, durch die Teilmatrize nicht gelöst. Des Weiteren ist die Teilmatrize mit vorgefertigtem Formkörper nicht universell einsetzbar.

Aus der DE 10 2004 035 332 A1 ist ein zahnärztlicher Matrizenformer bekannt. Es handelt sich bei dem zahnärztlichen Matrizenformer um ein speziell geformtes Handinstrument, um Anpressdruck auf die Matrize während eines Aushärtungsprozesses auszuüben, um eine möglichst enge Kontaktbeziehung der Füllung zu erzielen. Der Matrizenformer weist an mindestens einem Instrumentenende mindestens ein Stiftpaar bestehend aus zwei Stiften mit definiertem Abstand auf. Jedes einzelne Stiftpaar ermöglicht mit seinen Stiften ein Andrücken des verwendeten Matrizenbandes auf der gesamten Breite der oralvestibulären Kontaktfläche. Durch unterschiedlichen Stiftabstand der Stiftpaare können unterschiedliche oral-vestibuläre Kontaktbreiten konturiert werden. Auch bei dem offenbarten Matrizenformer der DE 10 2004 035 332 A1 kann jedoch nur eine ungenügend große Kraft aufgebracht werden, die es nicht erlaubt, einen optimalen Approximalkontakt zu schaffen. Des Weiteren ist die Einsetzbarkeit des offenbarten Matrizenformers begrenzt: Um einen möglichst weiten Einsatzbereich zu gewährleisten, sind viele verschiedene Stiftpaare mit unterschiedlichen Abständen zueinander an dem Gerät anzubringen. Zudem wird das Problem, Zahnstrukturen für einen Patienten schonend und dennoch in der richtigen Stärke und gezielt auseinanderzudrängen, durch den Matrizenformer nicht gelöst.

Aus der DE 11 07 373 B , worauf die zweiteilige Form des Anspruchs 1 basiert, ist ein Matrizenspanner und -halter zur Zahnbehandlung bekannt. Dieser ist in Form einer zahnärztlichen Spreizzange ausgebildet. Die Spreizzange verfügt dabei über einen ersten und einen zweiten Bereich, die jeweils einen singulären Spreizstift aufweisen. Bei einer Betätigung der Spreizzange werden die singulären Spreizstifte auseinandergedrängt. Die Spreizzange gemäß der DE 11 07 373 B verfügt also insbesondere nicht über einen Bereich, an dem mehrere Spreizstifte, beispielsweise ein Spreizstiftpaar befestigt wären.

Die DE 86 23 247 U1 offenbart eine Teleskopzange für Zahntechniker mit zwei durch Zusammendrücken zweier Griffhebel spreizbaren, fingerförmigen Backen. Sie verfügt über insgesamt drei Finger bzw. Spitzen, die sich an drei entsprechenden Punkten an der Innenfläche einer Innenkrone abstützen und ein sicheres Festhalten der Innenkrone ermöglichen können. Die offenbarte Haltezange ist als zahnärztliches Spreizinstrument zum Auseinanderdrängen benachbarter Zahnstrukturen im Rahmen einer Schaffung eines Approximalkontaktes bei einer Anfertigung einer plastischen Seitenzahnrestauration nicht geeignet, da sie weder die dafür notwendige konstruktive Ausgestaltung, noch die dafür notwendige Stabilität aufweist.

### Beschreibung der Erfindung

Es ist die Aufgabe der vorliegenden Erfindung, die vorstehend genannten Nachteile des Standes der Technik zu überwinden. Insbesondere ist es die Aufgabe der vorliegenden Erfindung, ein universelles Hilfsmittel zur optimalen reproduzierbaren Schaffung einer spaltfreien approximalen Kontaktbeziehung zwischen benachbarten Zahnstrukturen bereitzustellen.

Die Aufgabe wird gelöst durch den Gegenstand der unabhängigen Ansprüche. Vorteilhafte Ausführungsformen der Erfindung gehen aus den abhängigen Patentansprüchen hervor.

Das erfindungsgemäße zahnärztliche Spreizinstrument hat den Vorteil, dass es sich um ein universell einsetzbares Hilfsmittel handelt, das die reproduzierbare Schaffung einer spaltfreien approximalen Kontaktbeziehung gewährleistet. Durch die Universalität ist es möglich, das Hilfsmittel sowohl im Ober- als auch im Unterkiefer bei allen Zahntypen einzusetzen. Durch eine Bereitstellung zusätzliche Hilfsmittel kann dabei zusätzlich auch differenzierten Anforderungen an die Größe, Geometrie und Verschleißfestigkeit der Kontaktfläche entsprochen werden.

Ein weiterer Vorteil des zahnärztlichen Spreizinstruments ist es, dass mit seiner Hilfe benachbarte Zähne im Rahmen ihrer physlologischen Beweglichkeit kontrolliert auseinandergedrängt werden können, und zwar mit großen Vorteilen gegenüber der oben beschriebenen Verkeilung. Ein Angriffspunkt der angewandten verdrängenden Kraft liegt dabei nicht im zahnfleischnahen Zahnhalsberelch, sondern wird über eine Innenfläche einer zwisohengelagerten, Defekt begrenzenden Matrize direkt an der korrespondierenden Approximalkontaktfläche des benachbarten Zahnes ausgeübt. Dadurch kann sichergestellt werden, dass die Matrize an der exakten Wunschposition des Approximalkontaktes in einen innigen Kontakt zum verdrängten Nachbarzahn gebracht wird. Im Vergleich zur oben beschriebenen Handinstrumentierung kann dabei mithilfe des zahnärztlichen Spreizinstrumentes gemäß der Erfindung ein höherer und gleichzeitig sehr gut dosierbarer Kraftvektor ausgeübt werden. Es wird eine effektivere und dennoch schonende Auslenkung erzielt, und es werden die bei einer strengen Verkeilung häufig auftretenden Verletzungen und Blutungen der Zahnfleischpapille vermieden.

Gemäß einem ersten Aspekt der Erfindung bezieht sich diese auf ein zahnärztliches Spreizinstrument zum Auseinanderdrängen benachbarter Zahnstrukturen im Rahmen einer Schaffung eines Approximalkontaktes bei einer Anfertigung einer plastischen Seitenzahnrestauration. Bei dem zahnärztlichen Spreizinstrument kann es sich insbesondere um eine zahnärztliche Zange handeln, es sind jedoch auch andere Ausführungsformen denkbar (eine alternative Ausführungsform umfasst beispielsweise ein Spreizinstrument mit einem Bügel und einem Schlitten und wird weiter unten beschrieben). Unter einer Zange wird hierbei ein zweischenkliges Werkinstrument verstanden, bei dem die Wirkstellen (Greifbacken, Schneiden usw.) nie auf ganzer Länge aneinander vorbei gleiten. Erfindungsgemäß weist das Spreizinstrument einen ersten und einen zweiten Bereich auf, wobei der erste Bereich einen Spreizstift und der zweite Bereich zwei Spreizstifte aufweist, wobei der zweike Bereich mindestens einem Spreizstift mehr als der erste Bereich aufweist, so dass benachbarte Zahnstrukturen durch die Spreizstifte bei einer Betätigung des Spreizinstrumentes auseinandergedrängt werden können und eine korrekte approximale Kontaktbeziehung schaffbar ist Bei den genannten Bereichen kann es sich zum Beispiel um einen bestimmten Abschnitt des Spreizinstrumentes handeln, der sich strukturell von übrigen Abschnitten des Spreizinstrumentes unterscheidet, dies ist jedoch nicht zwingend der Fall. Gemäß einer bevorzugten Ausführungsform der Erfindung handelt es sich bei den Bereichen jeweils um Enden, insbesondere um freie und / oder endständige Enden des Spreizinstrumentes.

Bevorzugt ist es so, dass der erste Bereich exakt einen Spreizstift und der zweite Bereich exakt zwei Spreizstifte aufweist. Es ist aber auch möglich, dass der erste Bereich mehr als einen Spreizstift und der zweite Bereich mehr als zwei Spreizstifte aufweist. Die spreitzstifte oder der Spretzsift des ersten Bereiches einerseits und die Spreizstifte des zweiten Bereiches andererseits sorgen bei der Betätigung des Spreizinstrumentes für den Spreizvorgang der benachbarten Zahnstrutcturen. Dabei entfernen sich der wenigstens eine Spreizstift des ersten Bereiches und die wenigstens zwei Spreizstifte des zweiten Bereiches beim Spreizvorgang voneinander. Die Anzahl der verwendeten Spreizstifte je Bereich hat einen Einfluss darauf, in welcher Breite bzw. Größe ein Approximalkontakt modelliert werden kann. Vergleicht man beispielsweise einen einzelnen Spreizstift mit zwei Spreizstiften, so kann mit dem einen Spreizstift ein sehr schmaler Approximalkontakt bis hin zu einem punktuellen Kontakt modelliert werden. Werden hingegen zwei Spreizstifte, die sich bevorzugt in einem gewissen Abstand zueinander befinden, verwendet, so kann über den gesamten Abstand der Spreizstifte zueinander ein Approximalkontakt modelliert werden. Je mehr Spreizstifte also ein Bereich aufweist, desto breiter ist im Prinzip der modellierbare Approximalkontakt. Grundsätzlich wäre es denkbar, das erfindungsgemäße Spreizinstrument mit je einem Spreizstift pro Bereich zu versehen. Allerdings kann dann nur ein kleiner oder punktförmiger Approximalkontakt geschaffen werden, und zwar egal welcher der Stifte dem Nachbarzahn zugewandt wird. Die Ausstattung eines Spreizstiftes mit einem singulären Spreizstift und einem Spreizstiftpaar ermöglicht hingegen eine hohe universelle Einsetzbarkeit des Spreizinstrumentes. Es kann von einem Behandler wahlweise der einzelne Spreizstift zur Schaffung eines kleinen Approximalkontaktes oder aber das Spreizstiftpaar zur Schaffung eines größeren Approximalkontaktes eingesetzt werden.

Bei der Betätigung des Spreizinstrumentes handelt es sich um eine beliebige Betätigungsbewegung, die kausal ein Auseinanderspreizen der Spreizstifte der beiden Bereiche bedingt, an denen sich die Spreizstifte befinden. Handelt es sich bei dem Spreizinstrument z.B. um eine Zange, so kann sie durch die Handhabung der Zange, d.h. eine Bewegung eines Griffes der Zange vorgenommen werden. Bei einer alternativen Ausführungsform der Erfindung kann das Betätigen durch das Verstellen einer Schraube erfolgen.

In der Anwendung des zahnärztlichen Spreizinstrumentes ist es so, dass nach der Präparation einer Kavität und Anlegen einer Matrize bzw. Teilmatrize das Spreizen benachbarter Zahnstrukturen durch die Spreizstifte der beiden Bereiche erfolgt, wobei der eine Bereich mit seinem einzelnen Spreizstift oder mehreren Spreizstiften innerhalb des Zahndefektes abgestützt wird, und wobei der andere Bereich mit seinem einen Spreizstift oder den beiden oder mehr Spreizstiften über die Innenfläche der zwischengelagerten, Defekt begrenzenden Matrize an der korrespondierenden Approximalkontaktfläche des benachbarten Zahnes angreift. Bevorzugt ändert sich beim Auseinanderdrängen der Spreizstifte der Abstand der Spreizstifte, die an den beiden Bereichen angebracht sind, zueinander, ohne dass diese jedoch wesentlich, bevorzugt gar nicht, gegeneinander verkippt werden. Dies ermöglicht eine besonders genau platzierte Kraftausübung an der korrespondierenden Approximalkontaktfläche des benachbarten Zahnes, insbesondere hinsichtlich Winkel und Höhe der Kraftausübung. Gemäß einer alternativen Ausführungsform der Erfindung ändert sich hingegen neben dem Abstand der Spreizstifte durch ein Verkippen der Spreizstifte zueinander auch deren Orientierung im Raum. Unter einem Spreizstift wird ein verhältnismäßig dünnes bzw. schmales längliches Element verstanden, das an den Bereichen, insbesondere Enden des Spreizinstrumentes angebracht ist. Die Art der Anbringung kann durch Anformen, Ankleben oder Anschrauben erfolgen. Die Spreizstifte sind bevorzugt zwischen 10 und 20 mm lang, bevorzugt zwischen 14 und 16 mm lang, höchst bevorzugt 15 mm lang. Sie weisen bevorzugt einen im Wesentlichen runden Querschnitt auf, können jedoch im Querschnitt z.B. auch oval oder mit Kanten, insbesondere abgeflachten Kanten, versehen sein. Gemäß einer bevorzugten Ausführungsform der Erfindung weisen die Spreizstifte einen runden Querschnitt auf. Die Stärke bzw. der Durchmesser eines Spreizstiftes liegt dabei bevorzugt im Bereich von 0,7mm bis 1,0mm, höchst bevorzugt bei etwa 0,8mm. Gemäß einer weiteren bevorzugten Ausführungsform sind die Spreizstifte an ihrer Außenseite leicht abgeflacht. Bevorzugt ist bei einer Abflachung der Spreizstifte vorgesehen, dass diese mit einer mikrorauen Oberfläche versehen sind. Gemäß einer weiteren bevorzugten Ausführungsform verfügt der Spreizstift bzw. verfügen die Spreizstifte über einen im wesentlichen dreieckigen Querschnitt. Bevorzugt sind die Spreizstifte so geformt, dass das Spreizinstrument samt den Spreizstiften nach Modellierung eines Approximalkontaktes, d.h. insbesondere nach Einbringen und Aushärten eines Füllmaterials, auch wieder problemlos entfernt werden kann. Dies ist insbesondere bei der Verwendung von modernen Füllungsmaterialien wie bei den Eingangs erwähnten hochviskosen Kompositen von Bedeutung. Beispielsweise gilt es, durch die Formgebung der Spreizstifte zu verhindern, dass sich ein beim Füllungsprozess verwendetes Füllmaterial auch oberhalb einer breitesten Stelle der Spreizstifte befinden kann und dort aushärtet, was in der Folge das Entnehmen des Spreizinstrumentes mit den Spreizstiften wesentlich erschweren bzw. gar unmöglich machen könnte. Eine solche Überlegung ist insbesondere bei verhätnismäßig tief liegenden Approximalkontakten von Bedeutung.

Die Spreizstifte sind bevorzugt parallel zueinander ausgerichtet, sie können identische Längen oder verschiedene Längen aufweisen. Bevorzugt sind sie entweder aus der Legierung des Zangenmaterials oder aus einem anderen geeigneten, besonders hochfesten Metall gefertigt. Gemäß einer bevorzugten Ausführungsform der Erfindung kann im Bereich der Zangenbranchen eine bevorzugt lösbare Schraubverbindung vorgesehen sein, die im Falle einer Beschädigung einen kostengünstigen Wechsel oder eine andere räumliche Anordnung der Spreizstifte ermöglicht.

Gemäß einer bevorzugten Ausführungsform der Erfindung umfasst das zahnärztliche Spreizinstrument eine Zange mit einem Griff, einem Gelenk und einem Zangenkopf, an dem die Spreizstifte angebracht sind. Bei einer Betätigung des Griffes wird der Zangenkopf aktiviert, so dass sich die Spreizstifte voneinander entfernen. Bevorzugt handelt es sich bei der Zange um eine Spreizzange. Gemäß einer bevorzugten Ausführungsform der Erfindung weist die Zange am Griff ein Federelement auf, so dass in einem Ruhezustand des Spreizinstrumentes bzw. der Zange der Griff geöffnet und der Zangenkopf geschlossen ist. Bei einer Betätigung der zahnärztlichen Zange wird entgegen der Federkraft über das Zusammendrücken des Griffes eine Kraft ausgeübt, und der Zangenkopf öffnet sich bzw. wird aktiviert. Im Falle eines etwa kugelförmigen oder etwa diskusförmigen Zangenkopfs können bei einer Aktivierung z.B. verschiedene Bereiche gegeneinander verdreht werden. An Bereichen des Zangenkopfes sind die Spreizstifte wie oben beschrieben angebracht. Bei einem Zangenkopf mit zwei Branchen können die Spreizstifte an Enden der Branchen vorgesehen sein. Durch das Schließen des Griffes werden die Spreizstifte an den beiden Bereichen des Zangenkopfes voneinander räumlich entfernt, und bei einer entsprechenden Abstützung der Spreizstifte an festen Strukturen können diese Strukturen auseinandergespreizt werden. Durch die Hebelwirkung der Zange und den längeren Kraftarm, der sich aus dem Abstand des Angriffspunktes zum Rotationszentrum der Zähne in der Mitte ihres knöchernen Wurzelfaches ergibt, wird so eine effektivere und dabei schonende Auslenkung möglich. Insbesondere werden bei einer strengen Verkeilung zwangsläufig auftretende Verletzungen und Blutungen der Zahnfleischpapille vermieden. Die Zangengriffe weisen einen handgerechten relativ großen Abstand auf. Bevorzugt weisen sie eine Länge von ca. 10 bis 12 cm auf und sind somit relativ kurz gehalten. Diese Ausführung ermöglicht eine besonders gut dosierbare, angemessene Krafteinleitung und eine sichere, zahnnahe Positionierung des Zangenkopfes mit seinen beiden Enden, an dem sich die Spreizstifte befinden.

Gemäß einer bevorzugten Ausführungsform der Erfindung ist das Spreizinstrument in einer Arbeitsebene betätigbar, und die Spreizstifte sind gewinkelt, insbesondere senkrecht, zu dieser Arbeitsebene ausgerichtet. Handelt es sich bei dem Spreizinstrument z.B. um eine zahnärztliche Spreizzange wie oben beschrieben, so liegen die Zangengriffe und Zangenbranchen (Zangenkopf) in einer Ebene, und die durch das Gelenk der Zange definierte Drehachse steht senkrecht auf dieser Ebene. Diese Ebene ist ebenfalls die Ebene, in der sich Zangengriffe und Branchen bei einer Betätigung der zahnärztlichen Zange bewegen und wird aus diesem Grunde als Arbeitsebene bezeichnet. In analoger Weise lässt sich auch für andere Spreizinstrumente als für die zahnärztliche Spreizzange eine Arbeitsebene definieren. Die Spreizstifte sind gewinkelt zu dieser Arbeitsebene ausgerichtet. Insbesondere sind sie im Wesentlichen senkrecht zu dieser Arbeitsebene ausgerichtet. Es ist aber auch möglich, dass andere Winkelungen, wie z.B. 80° bis 100°, oder bevorzugt 85° bis 95° vorgesehen sind. Die Abwinkelung der Spreizstifte bezüglich der Arbeitsebene hat den Vorteil, dass auf besonders komfortable Weise die Spreizstifte für die Seitenzahnrestauration bzw. das Auseinanderspreizen der benachbarten Zahnstrukturen eingesetzt werden können. Im Falle einer Spreizzange ist es z.B. möglich, das Instrument von der Wangenseite her in den Mund eines Patienten einzuführen und die Spreizstifte durch Anheben oder Absenken der Spreizzange in der Kavität auszurichten. In diesem Zusammenhang ist auch eine Winkelung von ca. 90° besonders vorteilhaft, da es dann durch simples Drehen der Spreizzange um 180° möglich ist, wahlweise Zähne im Oberkiefer oder Zähne im Unterkiefer zu versorgen.

Gemäß einer bevorzugten Ausführungsform ragen die Spreizstifte über die Arbeitsebene hinaus. Die Spreizstifte stehen somit über die Arbeitsebene bzw. über das Spreizinstrument bzw. die Zange hervor, was ein einfacheres Einführen der Spreizstifte in eine Kavität ermöglicht. Bevorzugt ragen die Spreizstifte über die Arbeitsebene auf beiden Seiten hinaus, was eine besonders einfache universelle Einsetzbarkeit des Spreizinstrumentes ermöglicht.

Gemäß einer bevorzugten Ausführungsform der Erfindung weist der Zangenkopf einer zahnärztlichen Zange zwei Branchen auf, die so geformt sind, dass sie bei geschlossenem Zangenkopf eine Öffnung begrenzen, die so dimensioniert ist, dass ein Lichtleiter einer Polymerisationslampe durch die Öffnung hindurch führbar ist. Die Öffnung selber kann dabei unterschiedliche Formen aufweisen. Sie kann im Wesentlichen viereckig, insbesondere im Wesentlichen quadratisch ausgebildet sein. Dabei können ihre Ecken spitz oder aber abgerundet ausgebildet sein. Es ist auch möglich, dass eine im Wesentlichen kreisförmige oder ovale Öffnung vorgesehen ist. Wichtig ist in diesem Zusammenhang, dass die Öffnung groß genug ausgebildet ist, als dass ein Lichtleiter einer Polymerisationslampe, die zu Zwecken der Aushärtung einer gelegten Füllung verwendet wird, durch diese Öffnung hindurch führbar ist. Ein solcher Lichtleiter hat typischerweise einen Durchmesser von ca. 10 mm bis 12 mm. Entsprechend ist die Öffnung dimensioniert. Insofern behindert das verwendete zahnärztliche Spreizinstrument bzw. die verwendete Spreizzange nicht die gewohnte Anwendung einer Polymerisationslampe mit Lichtleiter beim Aushärten einer Füllung.

Wie bereits oben ausgeführt, kann es sich bei dem zahnärztlichen Spreizinstrument um eine Zange handeln, dies ist jedoch nicht zwingend der Fall: Gemäß einer bevorzugten Ausführungsform der Erfindung weist das zahnärztliche Spreizinstrument einen Bügel und einen Schlitten auf, an denen der bzw. die Spreizstifte befestigt sind, wobei eine relative Position zwischen dem Bügel und dem Schlitten und damit zwischen den Spreizstiften durch ein Verfahren des Schlittens einstellbar ist. Bevorzugt erfolgt das Verfahren des Schlittens durch einen Schraubmechanismus. Gemäß einer bevorzugten Ausführungsform handelt es sich bei dem Bügel um einen Vollbügel, d.h. um eine Bügelschleife, in die der Schlitten hineinragt. Im Prinzip ist es auch möglich, den Bügel nicht in Form einer vollständigen Schleife, sondern in Form eines einseitigen Bogens vorzusehen. Dadurch ist es möglich, das zahnärztliche Spreizinstrument Platz sparend auszubilden. Allerdings kann im Falle der Ausbildung des Bügels als Bügelschleife bzw. als geschlossener Bügel eine höhere Stabilität des Spreizinstrumentes erzielt werden, da die beim Spreizvorgang auftretenden Kräfte über den gesamten Bügel bzw. zu beiden Seiten der am Bügel befestigten Spreizstifte bzw. des am Bügel befestigten Spreizstiftes verteilt bzw. aufgenommen werden können. Bevorzugt sind der Bügel und der Schlitten direkt miteinander verbunden. Bevorzugt weist der Bügel bzw. die Bügelschleife eine im Wesentlichen rechteckige Form auf, an die sich ein linearer Vorsprung anschließt, an dem der Schlitten befestigt ist und entlang dem der Schlitten auch verfahrbar ist. In den inneren Bereich dieses Bügels lässt sich ein Verfahrmechanismus wie z.B. eine Schraube aufnehmen, so dass bei einem Hinein- bzw. Hinausdrehen der Schraube aus diesem Fortsatz die relative Position zwischen dem Bügel bzw. der Bügelschleife und dem Schlitten sowie automatisch die relative Position zwischen den jeweils daran befestigten Spreizstiften bzw. dem daran befestigten Spreizstift einstellbar ist. Bevorzugt sind die Spreizstifte so an Bereichen des Bügels bzw. des Schlittens angeordnet, dass sie im Wesentlichen senkrecht zu einer Fläche, die durch den Bügel aufgespannt wird, ausgerichtet sind.

Gemäß einer bevorzugten Ausführungsform der Erfindung sind die Spreizstifte mit Schlauchhülsen umhüllt oder umhüllbar. Dabei ist es möglich, dass alle oder nur einige Spreizstifte mit Schlauchhülsen umhüllbar oder umhüllt sind. Die Schlauchhülsen können die Spreizstifte entlang ihrer gesamten Länge oder nur entlang eines Teils ihrer Länge umhüllen. Bevorzugt sind die Schlauchhülsen aus einem zähplastischen Kunststoff, bevorzugt einem zähplastischen transparenten Kunststoff. Der Innendurchmesser der Schlauchhülsen ist an den Außendurchmesser der Spreizstifte angepasst. Gemäß einer bevorzugten Ausführungsform verfügen sie über einen Innendurchmesser von ca. 0,8 mm und eine Länge von ca. 5 mm. Gemäß einer bevorzugten Ausführungsform beträgt der Außendurchmesser der Schlauchhülsen ca. 1,1 mm. Die Wandstärke der Schlauchhülsen beträgt bevorzugt 0,25 mm bis 0,35 mm, höchst bevorzugt ca. 0,30 mm. Bei einer Verwendung von Schlauchhülsen ist es notwendig, dass die Spreizstifte des Spreizinstrumentes einen bestimmten Abstand zueinander aufweisen. Insbesondere ist es notwendig, dass bei der Verwendung von mehreren Spreizstiften, insbesondere von zwei Spreizstiften an einem Bereich, insbesondere am Ende des Instrumentes, ein bestimmter Abstand vorgesehen wird, so dass die Schlauchhülsen problemlos aufgesteckt werden können und zwischen ihnen dennoch ein schmaler mittiger Spalt, z.B. in der Größenordnung von ca. 0,5 mm, verbleibt.

Sind an einem Bereich mehrere Spreizstifte, insbesondere zwei Spreizstifte vorgesehen, so ist es bevorzugt so, dass die beiden Spreizstifte sich nicht berühren, sondern einen bestimmten Abstand zueinander aufweisen. Dieser beträgt vorteilhaft ca. 1,0 mm bis ca. 1,2 mm, bevorzugt ca. 1,1 mm. Dies hat den Vorteil, dass bei einer Anwendung des zahnärztlichen Spreizinstrumentes zwischen den beiden Spreizstiften, die am selben Bereich befestigt sind, ein schmaler Kunststoffsteg ausgebildet werden kann, der einen approximalen Defektbereich hinreichend stabil vorkonturiert.

Gemäß einer weiteren bevorzugten Ausführungsform der Erfindung sind die Spreizstifte so angeordnet, dass in ungespreiztem Zustand des Spreizinstrumentes die Spreizstifte parallel zueinander und in einer Reihe liegend angeordnet sind. Bevorzugt ist es dabei so, dass in der Reihe liegende Spreizstifte, die zu verschiedenen Bereichen gehören bzw. an diesen befestigt sind, alternierend vorgesehen sind. Aber auch andere Anordnungen sind denkbar. Die Anordnung der Spreizstifte parallel zueinander und in einer Reihe liegend hat den Vorteil, dass die Spreizstifte dicht zueinander gepackt sind, so dass eine Anwendung des zahnärztlichen Spreizinstrumentes auch bei sehr kleinen Defekten im Seitenzahnbereich möglich ist. Dabei können die Spreizstifte exakt in Reihe liegen, ihre Lage kann aber zum Beispiel auch von der exakten Reihe leicht zichzackartig abweichen. Gemäß einer besonders bevorzugten Ausführungsform der Erfindung weist ein Bereich des Spreizinstrumentes zwei zueinander parallel und voneinander beabstandete Spreizstifte auf, und der andere Bereich des Spreizinstrumentes weist einen einzelnen Spreizstift auf. In ungespreiztem d.h. unbetätigtem Zustand des Spreizinstrumentes ist es so, dass der einzelne Spreizstift zwischen den paarigen Spreizstiften zum Liegen kommt. Es ist dabei auch möglich, dass die Spreizstifte einander berühren, dies ist jedoch nicht zwingend erforderlich. Gemäß einer anderen bevorzugten Ausführungsform der Erfindung befinden sich zwei Spreizstifte eines Bereiches des Spreizinstrumentes zwischen zwei außen liegend angebrachten Spreizstiften eines anderen Bereiches des Spreizinstrumentes. Wie bereits ausgeführt, sind gemäß einer weiteren bevorzugten Ausführungsform der Erfindung die Spreizstifte im Querschnitt im Wesentlichen dreieckig. Eine solche Ausführung ermöglicht auf besonders elegante Weise eine sehr dichte Packung der Spreizstifte bei einer Anordnung derselben parallel zueinander und in einer Reihe liegend: Die Spreizstifte können quasi miteinander verzahnt werden.

Gemäß einer weiteren bevorzugten Ausführungsform weist das zahnärztliche Spreizinstrument einen Formkörper auf, der an wenigstens einem der Spreizstifte befestigbar oder befestigt ist. Der Formkörper ist dazu geeignet, um einen Bereich eines Approximalkontaktes bei einer Seitenzahnrestauration auszubilden. Der Formkörper bildet somit ebenfalls einen Teil des Füllmaterials, mit dem die Kavität aufgefüllt wird. Der Formkörper kann beispielsweise aus Kunststoff oder Keramik hergestellt sein. Bevorzugt entspricht der Formkörper hinsichtlich seiner Geometrie den Anforderungen an eine approximale Kontaktfläche, d.h. er ist beispielsweise mit einer plan-ovalen, hochglanzpolierten Kontaktfläche versehen. Insbesondere handelt es sich bei dem Formkörper um einen präfabrizierten Formkörper, d.h. um einen im Vorfeld gefertigten festen Körper, der nicht erst während des Füllvorganges aushärten muss. Es ist somit möglich, den Werkstoff für einen Formkörper optimal auszuwählen und dadurch bei dem Approximalkontakt eine höhere Verschleißfestigkeit gegen mechanischen Abrieb der sich wechselseitig abstützenden und gegeneinander beweglichen approximalen Kontaktflächen auszuwählen. Bevorzugt wird der Formkörper als integraler Bestandteil adhäsiv in die geschichtete Füllung einpolymerisiert. Die Seiten des Formkörpers, die einpolymerisiert werden, sind dazu bevorzugt mit einer retentiven, mikrorauen, beispielsweise sandgestrahlten Oberflächenstruktur versehen, die z.B. durch eine Silanisierung zusätzlich vorkonditioniert sein kann.

Es gibt im Prinzip mehrere Möglichkeiten, wie der oben beschriebene Formkörper an wenigstens einem der Spreizstifte befestigt werden kann. Beispielsweise ist es möglich, den Formkörper mit wenigstens einer Bohrung auszugestalten, durch die ein Spreizstift einschiebbar ist oder eingeschoben ist. Bei dieser Bohrung kann es sich um eine Bohrung mit einer rundherum intakten Wandung handeln, d.h. um eine Wandung, die keinerlei Ausnehmungen oder Öffnungen im Seitenbereich aufweist. Alternativ ist es aber auch möglich, dass in einem Umfangsbereich des Formkörpers wenigstens eine Aussparung vorgesehen ist, um darin einen Spreizstift aufzunehmen. Eine Bohrung oder eine Aussparung kann in ihrer Form so angepasst sein, dass ein Spreizstift formschlüssig oder reibschlüssig in die Bohrung oder Aussparung hineingeschoben bzw. hinelnschiebbar ist Es ist somit eine bestimmte Passform vorgesehen.

Gemäß einer bevorzugten Ausführungsform der Erfindung ist der Formkörper auf zwei Spreizstifte aufschiebbar oder aufgeschoben. Bevorzugt weist der Formkörper zu diesem Zweck zwei Bohrungen oder Aussparungen auf, In die die Spreizstifte einsohiebbar bzw. eingeschoben sind.

Das Vorsehen eines Formkörpers, der an einem oder mehreren Spreizstiften befestigt ist, hat den Vorteil, dass bei einem Spreizvorgang der erforderliche Druck auf die verwendete Matrize und den Nachbarzahn über den Formkörper und nicht direkt über die Spreizstifte selbst ausgeübt wird. Es erfolgt somit eine bessere und gleichmäßigere Druckausübung auf die approximale Kontaktfläche des Nachbarzahns mit Original der Struktur, die nach der Seitenzahnrestauration die Approximalkontaktfläche des behandelten Zahnes ausbildet. Die Größe des verwendeten Formkörpers orientiert sich primär an der Anatomie des zu versorgenden Zahnes. Beispielsweise benötigen Molaren, d.h. große Backenzähne, einen großflächigeren Approximalkontakt, Prämolaren, d.h. kleine Backenzähne, erfordern eine kleinere Kontaktfläche.

Gemäß einem weiteren Aspekt der Erfindung bezieht sich diese auf ein System umfassend ein zahnärztliches Spreizinstrument und eine Matrize zur Bildung einer dichten und formgebende Wandung im Approximalraum. Bei dem zahnärztlichen Spreizinstrument handelt es sich um ein Spreizinstrument, wie es oben bereits detailliert beschrieben wurde. Bei der Matrize handelt es sich um eine an sich bekannte Matrize oder Teilmatrize, die bevorzugt 0,03 bis 0,05 mm dünne, flexible Bänder oder kleine, konvex gekrümmte Formteile aus Metall oder transparentem Kunststoff, die über die Defektgrenzen hinausgehend an die intakten Zahnflächen adaptiert werden, aufweist, um so im Approximalraum eine dichte und formgebende Wandung zu bilden, die durch ein Restaurationsmaterial formschlüssig gefüllt werden kann.

Das erfindungsgemäße zahnarztliche Spreizinstrument kann beispielsweise im Rahmen des folgenden Verfahren, das selbst nicht durch das Patent geschützt ist, eingestzt werden : Verfahren zur Schaffung eines Approximalkontaktes bei der Anfertigung einer Seitenzahnrestauration das wenigstens die folgenden Schritte aufweist.
- Anlegen einer Defekt begrenzenden Matrize an bzw. um eine approximale Kavifät;
- Einbringen eines Füllmaterials in die Kavität;
- Einbringen eines Spreizinstrumentes mit zwei Bereichen in die Kavität, an denen wenigstens je ein Spreizstift befestigt ist;
- Spreizen benachbarter Zahnstrukturen, wobei sich der eine Bereich des Spreizinstrumentes an der Matrize und sich der andere Bereich an einer stabilen Fläche der Zahnkavität, insbesondere an einer Kastenschulter der Kavität, abstützt, und wobei durch das Spreizen matrizenseitig eine Struktur für einen Approximalkontakt modelliert wird;
- Aushärten des Füllmaterials;
- Entfernen des Spreizinstrumentes, wobei Hohlräume im Füllmaterial zurückbleiben;
- Nachbefüllen der Hohlräume mit einem Füllmaterial;
- Aushärten des Füllmaterials in den Hohlräumen;
- Entfernen der Matrize.

Verfahren, in dem das erfindungsgemäße Spreizinstrument zur Anwendung kommt, hat den Vorteil, dass es möglich ist, die zur Auseinanderdrängung der benachbarten Zahnbereiche aufzuwendende Kraft nicht im zahnfleischnahen Zahnhalsbereich aufzuwenden, sondern über die Innenfläche der zwischengelagerten, Defekt begrenzenden Matrize exakt an der korrespondierenden Approximalkontaktfläche des benachbarten Zahnes. Dadurch kann auf besonders gute Art und Weise sichergestellt werden, dass die Matrize an der exakten Wunschposition des Approximalkontaktes in einen innigen Kontakt zum verdrängten Nachbarzahn gebracht wird. Durch das erfindungsgemäße Spreizinstrument bzw. die Verwendung einer erfindungsgemäßen Spreizzange kann ein höherer und gleichzeitig sehr gut dosierbarer Kraftvektor ausgeübt werden, da durch eine sehr grazile Ausführung ihrer Arbeitsenden die Zange innerhalb des Zahndefektes abgestützt wird. Durch die Hebelwirkung der Zange und den längeren Kraftarm, der sich aus dem Abstand des Angriffspunktes zum Rotationszentrum der Zähne in der Mitte ihres knöchernen Wurzelfaches ergibt, wird so eine effektivere und dabei schonende Auslenkung erzielt. Daneben werden bei einer strengen Verkeilung zwangsläufig auftretende Verletzungen und Blutungen der Zahnfleischpapille vermieden.

Auch kann das oben beschriebene Verfahren durch die folgenden Verfahrensschritte ergänzt werden:
- Bereitstellen eines Formkörpers, um den Bereich des Approximalkontaktes bei der Seitenzahnrestauration auszubilden;
- Befestigen des Formkörpers an dem Spreizinstrument vor dem Einbringen des Spreizinstrumentes, so dass der Formkörper gemeinsam mit dem Spreizinstrument in die Kavität einbringbar ist bzw. eingebracht wird; und
- Trennen des Formkörpers vom Spreizinstrument nach dem Aushärten des Füllmaterials.

Die zusätzlichen Verfahrensschritte bieten den Vorteil, dass der erforderliche Druck auf die Matrize und den Nachbarzahn nicht über die Spreizstifte, sondern stattdessen über den Formkörper selbst ausgeübt wird. Des Weiteren ist es möglich, bei geeigneter Werkstoffwahl des Formkörpers - wie oben vorstehend bereits beschrieben - eine höhere Verschleißfestigkeit gegen mechanischen Abrieb der sich wechselseitig abstützenden und gegeneinander beweglichen approximalen Kontaktflächen sicherzustellen.

Die Erfindung wird noch besser verstanden werden unter Bezugnahme auf die beigefügten Zeichnungen.
- Fig. 1: zeigt eine bevorzugte Ausführungsform eines zahnärztlichen Spreizinstrumentes in Form einer Spreizzange, wobei die Darstellung a) eine Draufsicht auf die Arbeitsebene des zahnärztlichen Spreizinstrumentes darstellt, und Ansicht b) eine um 90° gedrehte Darstellung zeigt;
- Fig. 2: zeigt eine vergrößerte Darstellung von Gelenk und Zangenkopf aus Fig. 1 a);
- Fig. 3: illustriert eine mögliche Beabstandung von Spreizstiften zueinander bei Verwendung von Schlauchhülsen;
- Fig. 4: zeigt eine angelegte Matrize während einer Seitenzahnrestauration in der Draufsicht;
- Fig. 5: zeigt eine Verwendung einer Spreizzange mit insgesamt drei Spreizstiften;
- Fig. 6: zeigt die Verwendung einer Spreizzange mit Schlauchhülsen über zwei Spreizstiften in einer Draufsicht;
- Fig. 7: zeigt einen Ausschnitt einer Seitenansicht der Darstellung aus Fig. 6;
- Fig. 8: zeigt eine perspektivische und vergrößerte Ansicht von Fig. 6;
- Fig. 9: zeigt eine perspektivische Prinzipdarstellung betreffend den Einsatz einer erfindungsgemäßen Spreizzange unter Verwendung eines Formkörpers;
- Fig. 10: zeigt eine Draufsicht der Darstellung von Fig. 9;
- Fig. 11: zeigt verschiedene Formkörper;
- Fig. 12: zeigt einen an zwei Spreizstiften befestigten Formkörper sowie verschiedene Ansichten von Formkörpern unterschiedlicher Größe;
- Fig. 13: illustriert das Einbringen von Kunststoffinkrementen und den anschließenden Einsatz einer Spreizzange;
- Fig. 14: illustriert eine Vormodellierung großer Kavitäten durch vorhergehendes Einbringen selektiver Kunststoffinkremente sowie die Verwendung eines Platzhalters;
- Fig. 15: zeigt eine alternative Ausführungsform einer erfindungsgemäßen Spreizzange mit zwei Spreizstiftpaaren;
- Fig. 16: zeigt eine alternative Ausführungsform der Erfindung mit einer Bügel/Schliften-Konstruktion;
- Fig. 17: zeigt bei der Ausführungsform in Fig. 16 verwendete Spreizstifte.

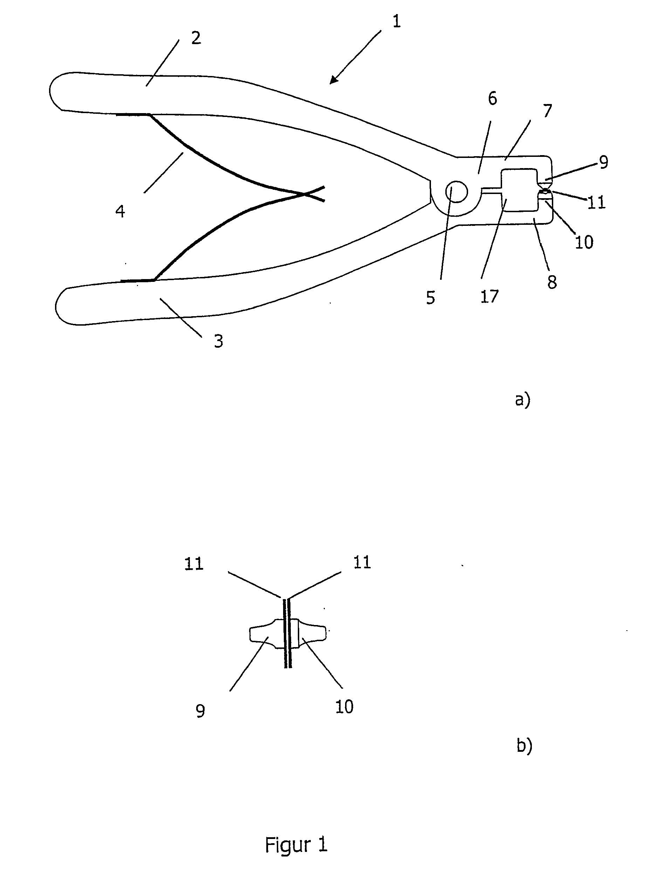

Fig. 1 zeigt eine bevorzugte Ausführungsform des erfindungsgemäßen zahnärztlichen Spreizinstrumentes in Form einer Spreizzange 1. Die dargestellte Spreizzange 1 verfügt über einen Griff mit zwei Schenkeln 2 und 3, ein Gelenk 5 und einen Zangenkopf 6. Die äußeren Abmessungen der Zange 1 bzw. insbesondere ihres Griffes mit den Schenkeln 2 und 3 ist so bemessen, dass die Zange gut in der Hand eines Behandlers liegen kann. Die beiden Schenkel 2 und 3 des Griffes sind durch ein Federelement 4 gegeneinander vorgespannt. Werden die beiden Schenkel 2 und 3 entgegen der Federkraft der Feder 4 aufeinander zu bewegt, so öffnet sich der Zangenkopf 6 der Spreizzange. Der Zangenkopf 6 ist im Wesentlichen aus zwei Branchen 7 und 8 aufgebaut. Die Form dieser Branchen ist gewinkelt, d.h. hier sind die Zangenbranchen gleich hinter dem Gelenk 5 zweifach rechtwinklig abgekröpft, so dass diese im geschlossenen Zustand eine rechteckige, hier annähernd quadratische Öffnung 17 mit einer Seitenlänge von jeweils ca. 10 bis 12 mm, begrenzen. Die Zangenbranchen weisen im Querschnitt eine Dimensionierung von ca. 3 mm x 3 mm auf. Es ist möglich, die einander gegenüberliegenden Branchenenden zu verstärken, z.B. in vertikaler Ausdehnung eine symmetrische Materialverstärkung um ca. 2 mm vorzunehmen, so dass eine Gesamtstärke von ca. 7 mm resultiert.

Die dargestellte Zange 1 weist zwei Bereiche 9 und 10 auf, an denen Spreizstifte 11 befestigt sind. Im vorliegenden Fall handelt es sich bei den Bereichen 9 und 10 um Endbereiche des Spreizinstrumentes. Es muss sich jedoch nicht zwangsläufig um solche offenen Enden eines Spreizinstrumentes handeln. Ein Branchenende 9 verjüngt sich konisch hin auf das andere Ende. Das gegenüberliegende Branchenende 10 ist mittig leicht eingekerbt und verrundet. An den Branchenenden 9 und 10 sind Spreizstifte 11 vorgesehen. Die in Fig. 1 a gezeigte Darstellung ist eine Draufsicht auf die Arbeitsebene der Spreizzange 1. Das bedeutet, bei Betätigung der Zange 1 bewegt sich diese in der Papierebene. Die Spreizstifte 11 sind senkrecht zu dieser Arbeitsebene der Zange 1 ausgerichtet. Sie sind jeweils starr an den Branchenenden fixiert. Sie können entweder aus der Legierung des Zangenmaterials oder einem anderen geeigneten, besonders hochfesten Material gefertigt sein. Fig. 1b ist eine um 90° gedrehte Darstellung des Wirkbereiches des Zangenkopfes 6. Er verdeutlicht, dass die Spreizstifte 11 über die Abmessungen der Zange 1 hinausragen, so dass ein Einführen der Spreizstifte 11 in eine Kavität möglich wird, ohne dass dabei möglicherweise andere Teile der Zange 1 auf dem Zahn aufliegen müssen oder stören. Des Weiteren ist ersichtlich, dass dieses Hinausragen über die Arbeitsebene der Zange 1 (bzw. über die Zange 1) in beide Richtungen erfolgt, in die sich die Spreizstifte 11 erstrecken. Dies ist nicht notwendigerweise der Fall, hat aber den Vorteil, dass die Spreizzange wahlweise im Oberkiefer oder im Unterkiefer eines Patienten und unabhängig von der Defektgeometrie (mo oder od oder mod) zum Einsatz kommen kann.

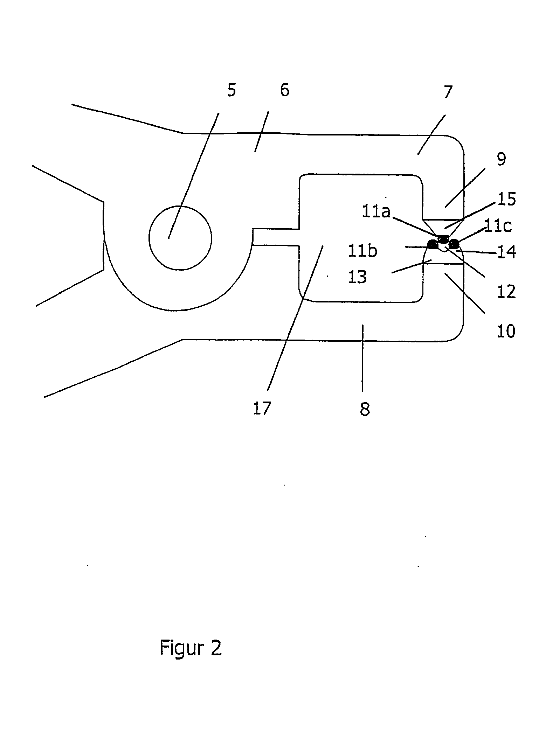

Fig. 2 zeigt eine vergrößerte seitliche Darstellung von Gelenk 5 und Zangenkopf 6. In dieser Darstellung ist besonders gut der sich konisch verjüngende Bereich 15 an einem Ende des Spreizinstrumentes 1 der bezüglich auf die Zeichnung oberen Branche 7 zu erkennen. An der Spitze des Konus befindet sich ein erster Spreizstift 11 a. Im Gegensatz dazu befindet sich am zweiten Ende 10 der Zange 1 ein Bereich 13 mit einer Einkerbung 12 und zwei Höckern bzw. Vorsprüngen 14, an denen wiederum zwei Spreizstifte 11 b und 11 c jeweils befestigt sind. Der Spreizstift 11a greift mittig in einen Bereich zwischen den beiden anderen Spreizstiften 11 b und 11 c ein, was es ermöglicht, das erfindungsgemäße Spreizinstrument 1 auch bei sehr kleinen Kavitäten zum Einsatz zu bringen. Dies wäre bei einem größeren Mindestabstand zwischen dem Spreizstiftpaar 11b und 11 c und dem mittigen singulären Spreizstift 11a erschwert oder gar nicht möglich. Die Spreizstifte 11a, 11 b und 11c sind parallel zueinander und im wesentlichen in einer Reihe angeordnet.

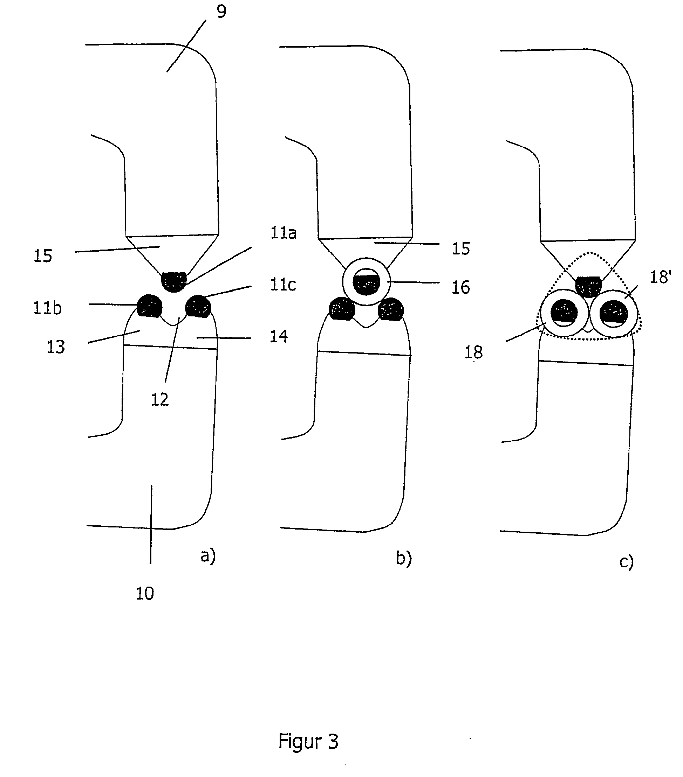

Fig. 3 illustriert eine mögliche Beabstandung von Spreizstiften zueinander bei Verwendung von Schlauchhülsen. Die Darstellung in Fig. 3a) illustriert eine erfindungsgemäße Anordnung unter Verwendung von einem singulären mittig platzierten Spreizstift 11a und einem diesem Spreizstift 11a gegenüberliegenden Paar von Spreizstiften 11b und 11c. Im dargestellten Fall a) sind keine Schlauchhülsen im Einsatz. In Darstellung b) ist auf die in Darstellung a) gezeigte Anordnung eine Schlauchhülse 16 auf den singulären Spreizstift 11 a aufgesteckt worden. Nach dem Aufstecken der Schlauchhülse 16 liegt diese nicht nur formschlüssig am Spreizstift 11a an, sondern tangiert auch die Spreizstifte 11b und 11 c. In der Darstellung c) ist nicht der singuläre Spreizstift 11a, sondern die beiden Spreizstifte 11b und 11 c des Spreizstiftpaares des unteren Endes 10 des Spreizinstrumentes mit Schlauchhülsen 18 und 18' ausgestattet. Die beiden Schlauchhülsen 18 und 18' berühren einander, dies ist jedoch nicht zwingend der Fall. Des Weiteren berühren die beiden Schlauchhülsen 18 und 18' den singulären Spreizstift 11a. Im Prinzip wäre es auch möglich, sämtliche Spreizstifte 11a, 11b und 11c mit Schlauchhülsen 16, 18 und 18' auszustatten. Dies ist in der Praxis jedoch meistens nicht notwendig, da bei der Verwendung der Spreizzange 1 nur entweder der singuläre Spreizstift 11a oder aber das Spreizstiftpaar 11b, 11 c zur Modellierung eines Approximalkontaktes verwendet wird. Die Schlauchhülsen dienen in diesem Zusammenhang jeweils dazu, einen breiteren d.h. großflächigeren Approximalkontakt durch Andruck auf eine verwendete Matrize 24 auszubilden. Der dazu nicht verwendete Spreizstift oder das dazu nicht verwendete Spreizstiftpaar hingegen stützt sich im approximalen Kasten an der Kastenschulter des Zahnes ab, wofür keine Verbreiterung des Wirkbereichs zwingend erforderlich ist.

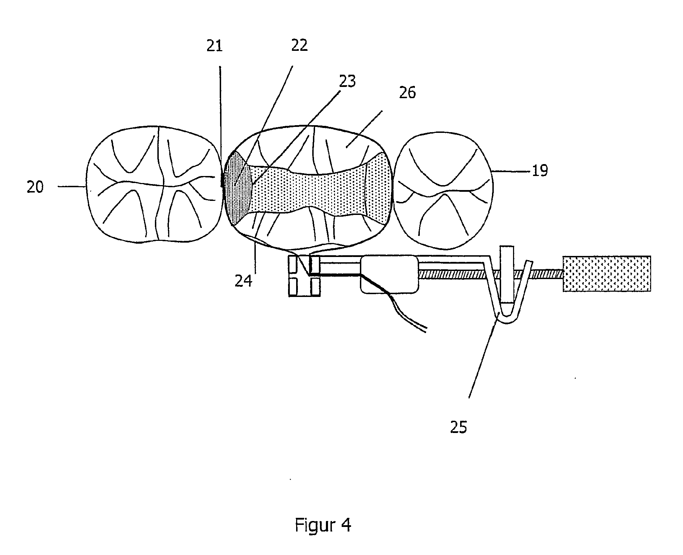

Fig. 4 illustriert das Anlegen einer Matrize während einer Seitenzahnrestauration in der Draufsicht. Eine Matrize 24 ist um den zu behandelnden Zahn 26 gelegt und fest eingespannt. Die Einspannung kann über eine Spannmechanik 25 reguliert werden. Die Matrize 24 dient der Abdichtung der Kavität 22 sowie der Formgebung eines zu verwendenden Füllmaterials. Die Matrize 24 grenzt dabei an die benachbarten Zähne 19 und 20, wobei im Rahmen der Seitenzahnrestauration ein Approximalkontakt 21 zum benachbarten Zahn 20 hergestellt werden soll.

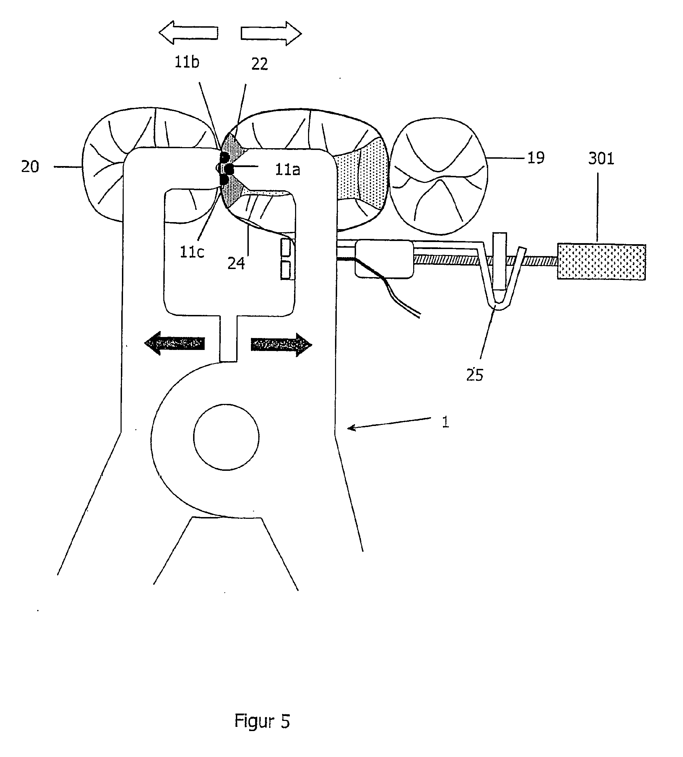

Fig. 5 zeigt die Verwendung einer Spreizzange 1 mit insgesamt drei Spreizstiften 11a, 11 b, 11 c, wie dies in Fig. 3a im Detail dargestellt wurde. Die Spreizstifte 11a, 11b und 11c ragen in Fig. 5 in die Papierebene hinein (d.h. über die Arbeitsebene der Spreizzange 1 hinweg bzw. stehen senkrecht auf dieser) und sind in die Kavität 22 abgesenkt. Zwei Spreizstifte 11 b und 11 c eines Spreizstiftpaares liegen direkt an der Matrize 24 im Bereich der approximalen Kontaktfläche 21 an, die zum Nachbarzahn 20 hinweist. Bei einer Betätigung der Spreizzange 1 entfernen sich die Zangenbranchen und somit die Spreizstifte 11b und 11 c einerseits sowie der Spreizstift 11a andererseits voneinander. Im gezeigten Beispiel werden die Spreizstifte nicht gegeneinander verkippt. Beim Öffnen der Spreizzange 1 erreicht der singuläre Spreizstift 11a die Kastenschulter 23 und stützt sich an dieser ab. Es wird in der Folge bei weiterem Öffnen der Spreizzange 1 ein Spreizdruck über die Matrize 24 direkt auf die approximale Kontaktfläche 21 des Nachbarzahns 20 ausgeübt, den Gegendruck nimmt der zu behandelnde Zahn 26 über die Kastenschulter 23 auf. Die Bewegungsrichtung des Spreizinstrumentes 1 ist durch die Pfeile in Fig. 5 angedeutet.

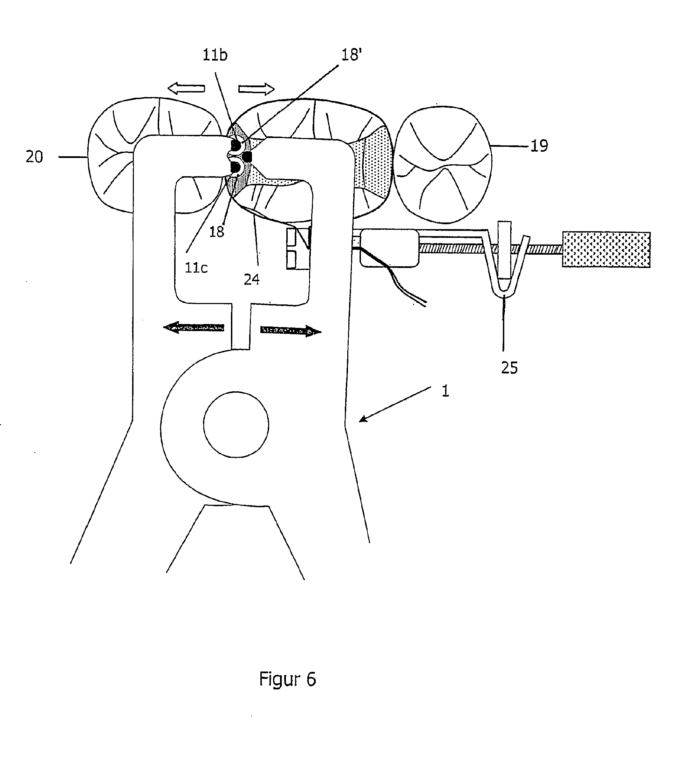

Fig. 6 zeigt die Verwendung einer Spreizzange 1 mit Schlauchhülsen 18 und 18' (vgl. Fig. 3c)). Die beiden Spreizstifte 11b und 11 c des Spreizstiftpaares sind jeweils mit einer Schlauchhülse 18 und 18' umhüllt. Dies erlaubt es, beim Spreizen der Zange 1 einen großflächigeren Druck über die Matrize 24 hin zum Nachbarzahn 20 auszuüben, und auf diese Weise einen großflächigeren Approximalkontakt 21 zu modellieren.

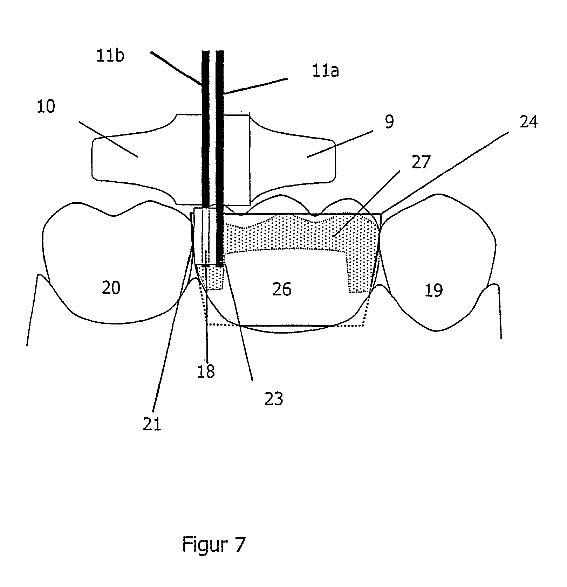

Fig. 7 ist ein Ausschnitt einer Seitenansicht der Darstellung in Fig. 6. Insbesondere ist in Fig. 7 gut zu erkennen, wie sich der singuläre Spreizstift 11 a gegen die Kastenschulter 23 abstützt. Des Weiteren ist gut zu erkennen, wie die Schlauchhülse 18, die den Spreizstift 11 b umhüllt, gegen den Nachbarzahn 20 gepresst wird.

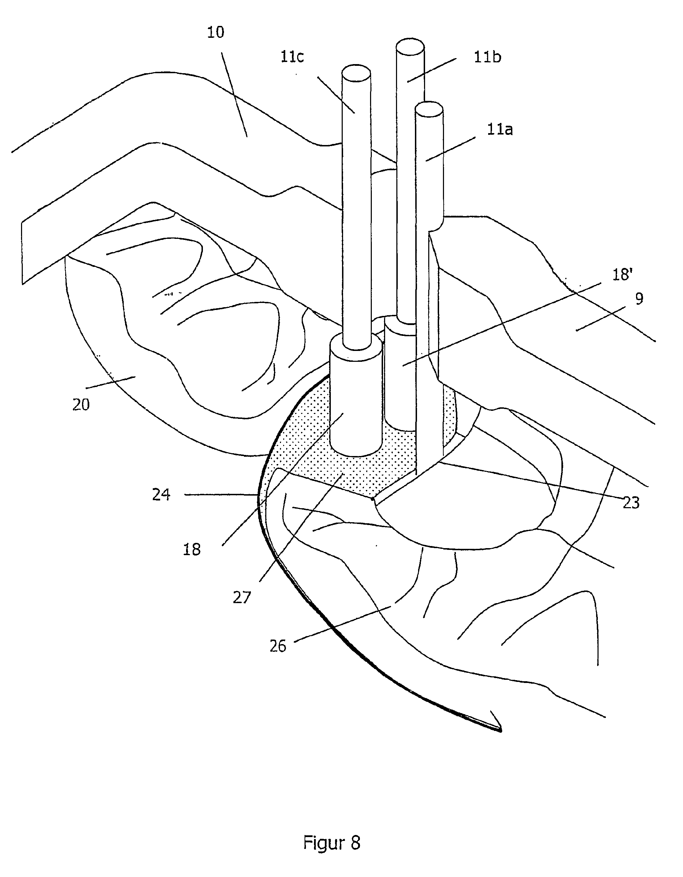

Fig. 8 ist eine schematisch-perspektivische und vergrößerte Ansicht von Fig. 6. Es ist zu erkennen, wie der singuläre Spreizstift 11a sich an der Kastenschulter 23 abstützt, und wie die beiden Spreizstifte 11b und 11c - jeweils von einer Schlauchhülse 18 bzw. 18' umgeben - in die Kavität 22 eingeführt sind und sich gegen die Matrize 24 abstützen. Des Weiteren ist in dieser vergrößerten Darstellung gut zu erkennen, dass der singuläre Spreizstift 11 a mittig an dem Ende 9 des Spreizinstrumentes 1 angebracht ist, während sich die beiden Spreizstifte 11b und 11c in diesem Fall symmetrisch zur gedachten Mitte des Endes 10 befinden, so dass der Spreizstift 11a zwischen das Spreizstiftpaar 11b und 11 c in geschlossenem Zustand teilweise hineinragt bzw. unten an den Schlauchhülsen 18 und 18' zu liegen kommt.

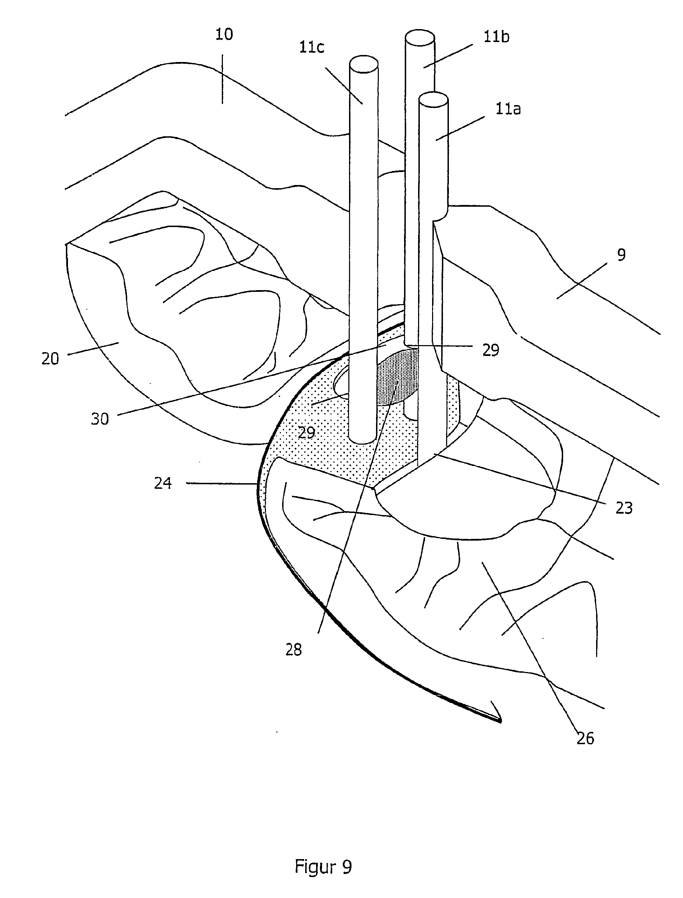

Fig. 9 zeigt eine perspektivische Prinzipdarstellung betreffend den Einsatz einer erfindungsgemäßen Spreizzange 1 unter Verwendung eines Formkörpers 28. Der Formkörper 28 ist an dem Spreizstiftpaar 11 b und 11 c befestigt. Wie in Fig. 9 nur leicht angedeutet ist, weist der Formkörper 28 zu diesem Zweck zwei Aussparungen 29 auf, in die die Spreizstifte 11 b und 11 c des Spreizstiftpaares eingreifen. Der Formkörper 28 weist eine Außenseite 30 auf, die der Matrize 24 bzw. dem benachbarten Zahn 20 zugewandt ist. Diese Außenfläche 30 des Formkörpers 28 bildet nach erfolgter Zahnrestauration den Approximalkontakt zum benachbarten Zahn 20 aus.

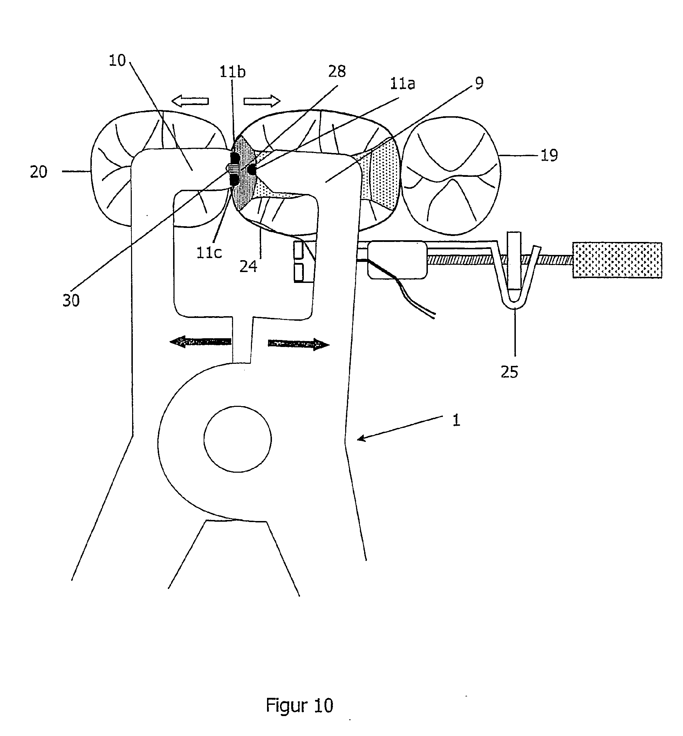

Fig. 10 zeigt die Darstellung von Fig. 9 in einer anderen Perspektive, nämlich in einer Draufsicht. In dieser Darstellung ist gut zu erkennen, wie der zwischen den beiden paarigen Spreizstiften 11 b und 11 c befindliche Formkörper 28 mit seiner Außenseite 30 an der Matrize 24 anliegt. Beim Öffnen der Zange 1 wird der Spreizdruck nicht direkt über das Spreizstiftpaar 11 b und 11 c auf die Matrize 24 in Richtung des Nachbarzahnes 20 in Höhe der Approximalkontaktfläche ausgeübt, sondern ein Großteil dieses Spreizdruckes wird direkt durch den Formkörper 28 ausgeübt. Wie bereits aus vorhergehenden Darstellungen bekannt, stützt sich der singuläre Spreizstift 11a wieder an der Kastenschulter 23 des zu behandelnden Zahnes 26 ab.

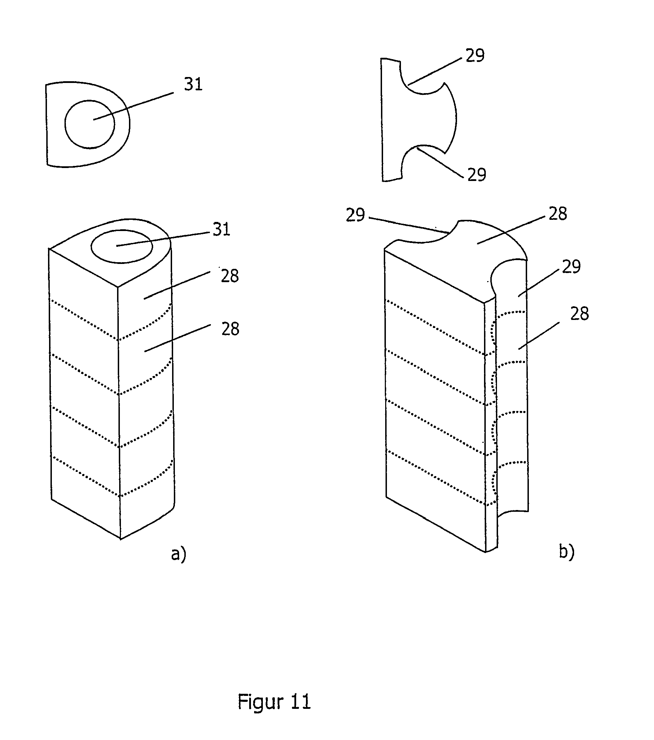

Fig. 11 zeigt verschiedene Formkörper, die auf besonders einfache Art und Weise hergestellt werden können. Die äußere umfängliche Form der Formkörper 28 kann sehr stark variieren, um eine einfache Herstellung zu gewährleisten, sind jedoch obere und untere Fläche des Formkörpers 28 (oben und unten bezieht sich auf die Darstellung in der Papierebene) eben ausgestaltet. So ist es z.B. möglich, einen Formkörper 28 vorzusehen, der eine ebene Seite aufweist, an die sich eine weitere Seitenfläche anschließt, die in etwa in Form eines Halbovales ausgebildet ist (siehe Fig. 11a)). Durch den Formkörper 28 hindurch erstreckt sich eine Bohrung31. Es ist nun möglich, den gesamten darstellten Körper entlang der punktiert angedeuteten Zwischenebenen zu durchtrennen, um mehrere einzelne Formkörper 28 zu erhalten. Gleiches ist auch mit dem Formkörper möglich, der in Fig. 11b) dargestellt ist. Der dort dargestellte Formkörper 28 bzw. Formkörperblock aus Formkörpern 28 weist an seinen Seitenbereichen jeweils eine Einbuchtung bzw. Aussparung 29 auf, in die die Spreizstifte eines Spreizstiftpaars eingepasst oder eingeschoben werden können. Wiederum ist es möglich, den Block von Formkörpern 28 entlang der Ebenen, die durch die Punktierung angedeutet sind, in mehrere einzelne Formkörper 28 aufzutrennen, was eine Herstellung des Formkörpers 28 wesentlich erleichtert.

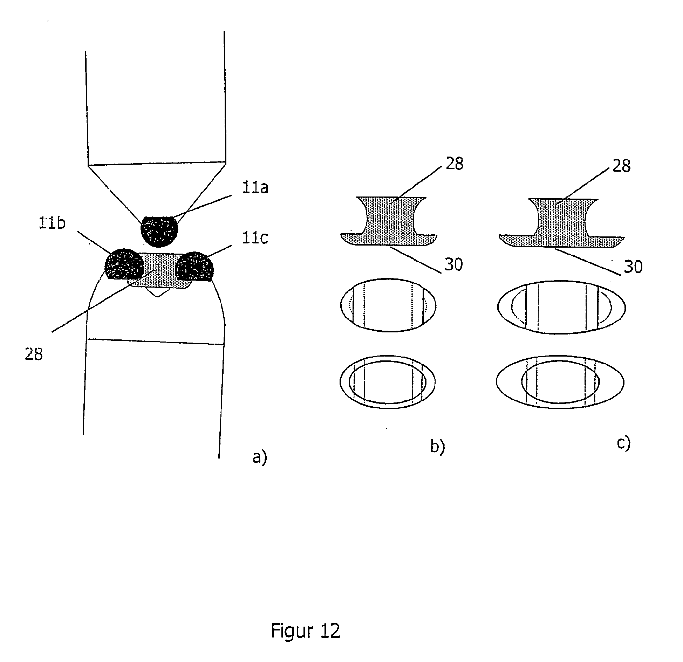

Fig. 12 zeigt einen an zwei Spreizstiften 11 b und 11 c befestigten Formkörper 28 sowie verschiedene Ansichten von Formkörpern unterschiedlicher Größe. Die Größe des Formkörpers 28 kann je nach gewünschter Größe des zu schaffenden Approximalkontaktes variieren. Dabei kann sich die Bohrung bzw. Aussparung für Spreizstifte stets an derselben Position befinden, so dass auch Formkörper 28 unterschiedlicher Größe auf ein und demselben Spreizstiftpaar 11b und 11c befestigt werden können. Dies gilt z.B. für die beiden Formkörper 28, die in den Darstellungen b) und c) von Fig. 12 dargestellt sind. Der in Fig. 12b) dargestellte Formkörper 28 passt auf die Spreizstifte 11b und 11c, wie in Fig. 12a) dargestellt. Allerdings ist die Außenfläche 30, die dazu dient, den Approximalkontakt zum Nachbarzahn auszubilden, schmaler ausgebildet als beispielsweise bei dem Formkörper 28, der in Fig. 12c) illustriert ist. Nichtsdestotrotz passt der Formkörper 28 aus Fig. 12c) auf dasselbe Spreizstiftpaar 11b und 11c, das in Fig. 12a) dargestellt ist.

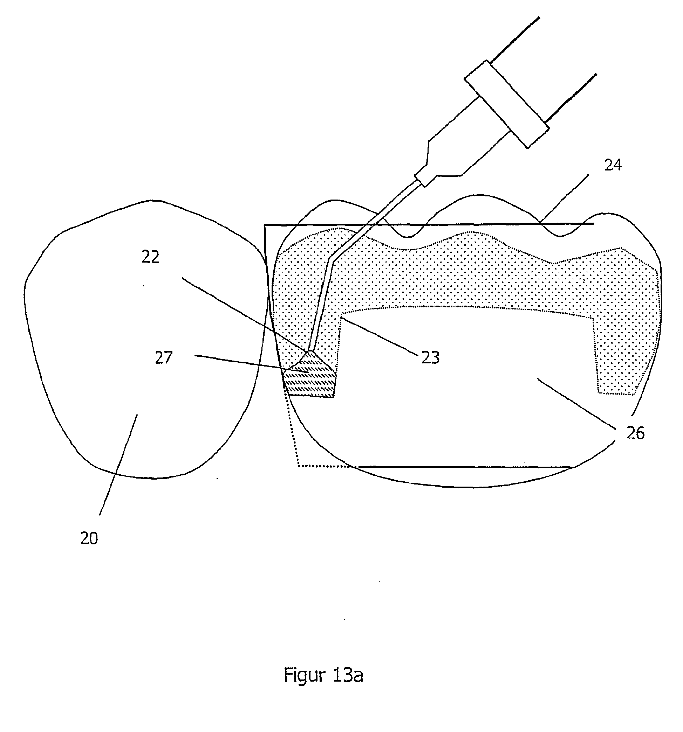

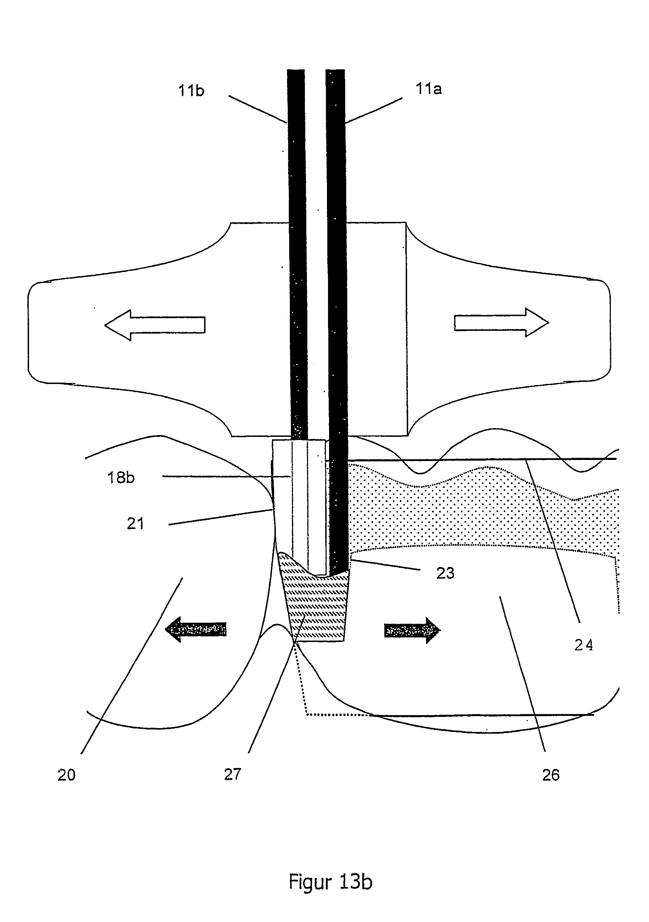

In Fig. 13a ist dargestellt, wie in den approximalen Kasten der Kavität 22 Füllmaterial 27 eingefüllt wird. Im gezeigten Beispiel handelt es sich dabei um ein fließfähiges Füllmaterial. In Fig. 13b wird die anschließende Verwendung einer erfindungsgemäßen Spreizzange illustriert. Die Spreizstifte 11 a, 11b und 11 c (letzterer in der Schnittansicht nicht zu erkennen) werden in den approximalen Kasten 22 eingesenkt und befinden sich dabei dann zwischen der Kastenschulter 23 und dem auszubildenden Approximalkontakt 21. Die dabei verwendete Matrize 24 befindet sich zwischen dem Nachbarzahn 20 und dem zu behandelnden Zahn 26 bzw. zwischen der Spreizzange 1 mit ihren Spreizstiften 11a, 11b und 11 c und dem Nachbarzahn 20. Die Spreizstifte 11 a, 11 b und 11 c tauchen in das Füllmaterial 27 ein. Dann wird die Spreizzange 1 betätigt, und der singuläre Spreizstift 11a entfernt sich von dem Spreizstiftpaar 11b und 11c, wobei die Zahnstrukturen 20 und 26 auseinandergedrängt werden und die Matrize 24 fest gegen den Nachbarzahn 20 gedrückt wird. Die Spreizzange 1 stützt sich dabei auf der einen Seite am Nachbarzahn 20 und auf der anderen Seite an der Kastenschulter 23 ab. Die Spreizstifte 11b und 11c sind jeweils von einer Schlauchhülse 18b bzw. 18c umgeben, wodurch jeweils eine vergrößerte Auflagefläche am Nachbarzahn 20 bzw. der dazwischen befindlichen Matrize 24 erzielt wird. Das Auseinanderdrängen der benachbarten Zahnstrukturen 20 und 26 ist durch die Pfeile in Fig. 13b angedeutet. Im gezeigten Beispiel erfolgt das Abstützen der Spreizzange 1 an der Kastenschulter 23 des zu behandelnden Zahnes 26. Dies ist eine typische Behandlungssituation. Allerdings ist es auch möglich, je nach Lage und Geometrie des Defektes, das Spreizinstrument 1 mit einem oder mehreren Spreizstiften 18 an einer anderen stabilen Fläche der Zahnkavität abzustützen.

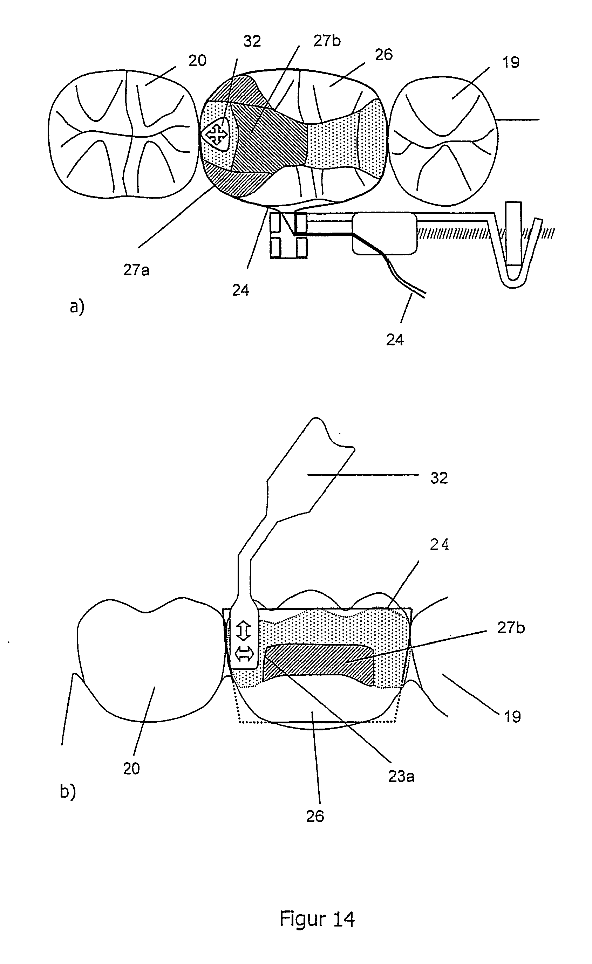

Fig. 14 illustriert ein weiteres Behandlungsbeispiel, insbesondere unter Zuhilfenahme eines Platzhalters 32. In Fig. 14a ist eine schematische Draufsicht gezeigt. Der zu behandelnde Zahn 26 befindet sich zwischen den benachbarten Zähnen 19 und 20. Zwischen dem Nachbarzahn 20 und dem zu behandelnden Zahn 26 soll eine Füllung mit Approximalkontakt ausgebildet werden. Der Füllvorgang erfolgt bei der im gezeigten Beispiel verhältnismäßig großen Kavität in mehreren Schritten: Zunächst werden die Flanken des zu behandelnden Zahnes mit einem hochviskosen Füllmaterial 27a aufgebaut. In einem weiteren Schritt wird der Zentralbereich mit einem Füllmaterial 27b aufgebaut. Erst in einem letzten finalen Schritt wird der approximale Kasten 22 der Kavität befüllt (nicht dargestellt). Um sicherzustellen, dass das erfindungsgemäße Spreizinstrument 1 auch zur Ausbildung des Approximalkontaktes 21 eingesetzt werden kann, wird ein Platzhalter 32 eingesetzt. Dieser Platzhalter 32 verfügt in etwa über die äußeren Abmessungen der Spreizstiftanordnung des erfindungsgemäßen Spreizinstrumentes 1. Bei den Abmessungen kann gegebenenfalls das Vorsehen von Schlauchhülsen 18 über den Spreizstiften 11 berücksichtigt werden. Der Platzhalter 32 kann dabei als einfaches hohles oder kompaktes Platzhalteinstrument ausgebildet sein. Bevorzugt ist der Platzhalter 32 mit Spiel In den approximalen Kasten der Kavität 22 absenkbar. Dieses Spiel ist durch die Pfeile in Figuren 14a und 14b angedeutet. Auf diese Weise kann sichergestellt werden, dass in einem nachfolgenden Behandlungsschritt das erfindungsgemäße Spreizinstrument 1 auch tatsächlich zur Ausbildung eines Approximalkontaktes 21 eingesetzt werden kann. Wird - wie in einigen Beispielen dargestellt - ein Spreizinstrument mit einem singulären Spreizstift einerseits und einem Spreizstiftepaar andererseits zum Einsatz gebracht, so ist der Querschnitt des Platzhalters 32 zB. in etwa dreieckig mit abgerundeten Eckbereichen. Diese Formgebung ist auch in Fig. 3c durch die punktierte Kontur, die die Spreizstifte 11 inklusive der Schlauchhülsen 18 umgibt, angedeutet.

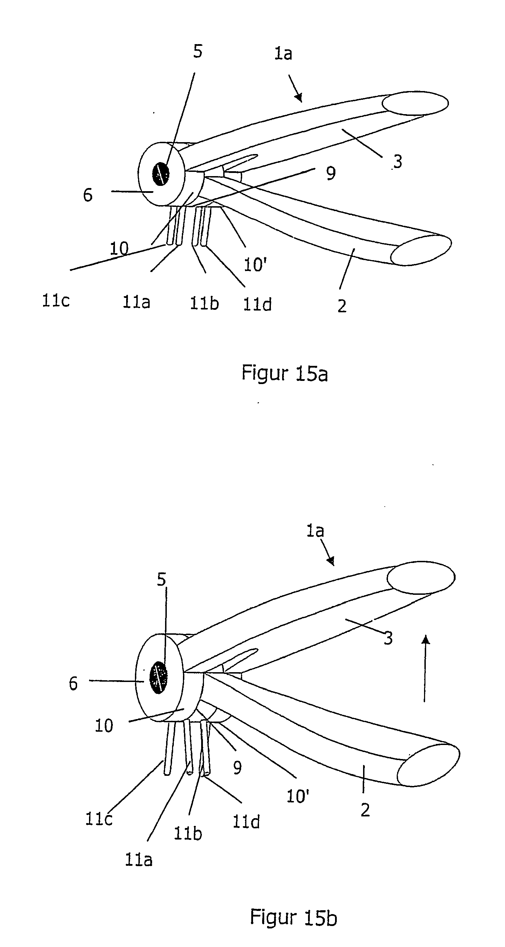

Fig. 15 zeigt beispielhaft Spreizzange 1a mit zwei Spreizstiftpaarren. Die Darstellung in Fig. 15a zeigt einen Ausgangszustand bzw. Ruhezustand der Spreizzange 1a, Fig. 15b zeigt einen Spreizzustand der Spreizzange 1a. Die dargestellte Spreizzange 1a weist wiederum zwei Schenkel 2 und 3 eines Griffes sowie ein Gelenk 6 auf. Anstelle der Zangenbranchen gemäß der ersten in Fig. 1 dargestellten Ausführungsform der Erfindung weist die Zange 1a nun flache, zylinderförmige Bereiche 10 und 9 auf, die die Spreizstifte 11 tragen. Konkret ist es so, dass die Bereiche 10 und 10' jeweils einen Spreizstift 11c und 11d tragen, die zusammen ein Spreizstiftpaar bilden. Die Bereiche 10 und 10' sind drehbar um ein Gelenk 6 des Zangenkopfes 6. Die Drehposition der Bereiche 10 und 10' und damit des ersten Spreizstiftpaares 11c und 11d ist dabei an die Lage des Griffes 3 gekoppelt. Zwischen den flachen zylinderförmigen Bereichen 10 und 10' befindet sich ein weiterer zylinderförmiger flacher Bereich 9, an dem ein zweites Spreizstiftpaar 11a und 11 b ausgebildet ist. Der Bereich 9 ist an den Griff bzw. die Position des Griffes gekoppelt. Wird der Griff mit seinen Schenkeln 2 und 3 zusammengedrückt, d.h. werden die beiden Schenkel 2 und 3 aufeinander zu bewegt, so verändern die Spreizstiftpaare 11c und 11d einerseits und 11a und 11b andererseits ihre relative Lage zueinander. Wie in Fig. 15b am besten ersichtlich, schwenken die beiden Spreizstifte 11a und 11b entlang einer Bewegungsrichtung, die in der Figur als Pfeil angedeutet ist, des Schenkels 2 des Griffs der Spreizzange 1a nach vorne bzw. leicht nach oben und werden bezogen auf das Spreizstiftpaar 11c und 11d im Raum verkippt. Auf diese Weise kann eine Spreizung zwischen den beiden Spreizstiftpaaren erzielt werden. Allerdings ist bei der in Fig. 15 dargestellten Ausführungsform anzumerken, dass sich bei dieser Ausführungsform die Spreizstifte 11 nicht senkrecht auf der Arbeltsebene, die durch die Relativbewegung der beiden Schenkel 2 und 3 der Zange 1 a zueinander definiert wird, befinden. Stattdessen sind in einem Ruhezustand (vgl. Fig. 15a) die Spreizstifte im Wesentlichen parallel zu der Arbeitsebene ausgerichtet.

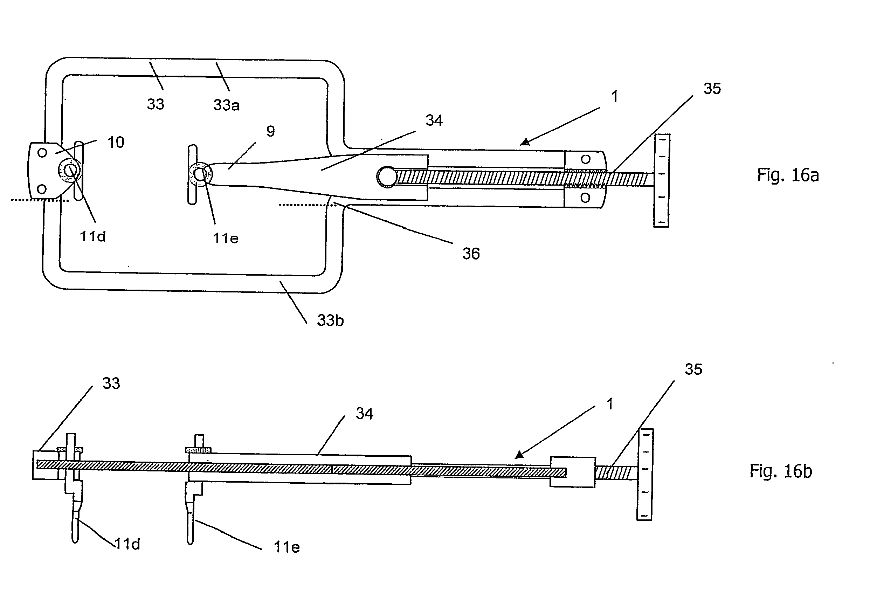

Figuren 16a und 16b beschreiben eine alternative Ausführungsform der Erfindung. Anders als in den vorstehend beschriebenen Beispielen ist das zahnärztliche Spreizinstrument 1 nicht als Zange ausgebildet. Stattdessen verfügt das Spreizinstrument 1 über einen Bügel 33 und einen Schlitten 34. An einem Bereich 10 des Bügels 33 und an einem Bereich 9 des Schlittens sind Spreizstifte 11 befestigt. Dabei kann es sich jeweils um singuläre, paarige oder sonstige Spreizstiftanordnungen handeln. Der Bügel 33 liegt in Form eines umlaufenden Rahmens vor. Dieser Rahmen bildet eine Ebene. In dieser Ebene verfahrbar ist der Schlitten 34. Die Spreizstifte 11 e und 11 d ragen aus dieser Ebene hervor, im gezeigten Beispiel sind sie im Wesentlichen senkrecht zu dieser Ebene ausgebildet. Durch ein Verfahren des Schlittens 34 (angedeutet durch die punktierte Linie 36) relativ zum Rahmen 33 kann der relative Abstand zwischen den Spreizstiften 11e und 11d verändert werden. Das Verstellen selbst erfolgt durch eine Betätigungsschraube 35, bei deren Betätigung der Schlitten 34 entlang der gepunkteten Linie 36 transversal bewegt werden kann. Entscheidend ist aber nicht die absolute Bewegung des Schlittens 34, sondern die relative Bewegung von Bügel 33 und Schlitten 34 mit den jeweils daran befestigten Spreizstiften 11d und 11e zueinander. Prinzipiell wäre es auch möglich, den Bügel 33 nur einseitig, z.B. im Bereich 33a hin bis zum Bereich 10 auszubilden. Vorteilhaft ist jedoch das Vorsehen des Bügels 33 in Form eines Vollbügels bzw. einer Schlaufe (im gezeigten Beispiel mit beiden Schenkeln 33a und 33b). Dies ermöglicht eine symmetrische Kraftaufnahme durch den Bügel 33, wenn das erfindungsgemäße Spreizinstrument 1 bei der Ausbildung eines Approximalkontaktes angewendet wird. Die in Fig. 16 gezeigte Ausführungsform des erfindungsgemäßen Spreizinstrumentes 1 hat gegenüber einer Zange den Vorteil, dass der Spreizzustand über die Betätigungsschraube 35 fest einstellbar ist. Auf diese Weise kann auch ein allein tätiger Behandler das erfindungsgemäße Spreizinstrument 1 problemlos einsetzen, er muss insbesondere nicht die ganze Zeit über das erfindungsgemäße Spreizinstrument 1 mit einer Hand festhalten. Umgekehrt bietet die Verwendung einer Spreizzange 1 allerdings den Vorteil, dass die Kraftaufnahme beim Spreizvorgang durch das erfindungsgemäße Spreizinstrument besser erfolgen kann, die Spreizzange ist insgesamt stabiler, und es können tendenziell größere Kräfte aufgenommen werden.

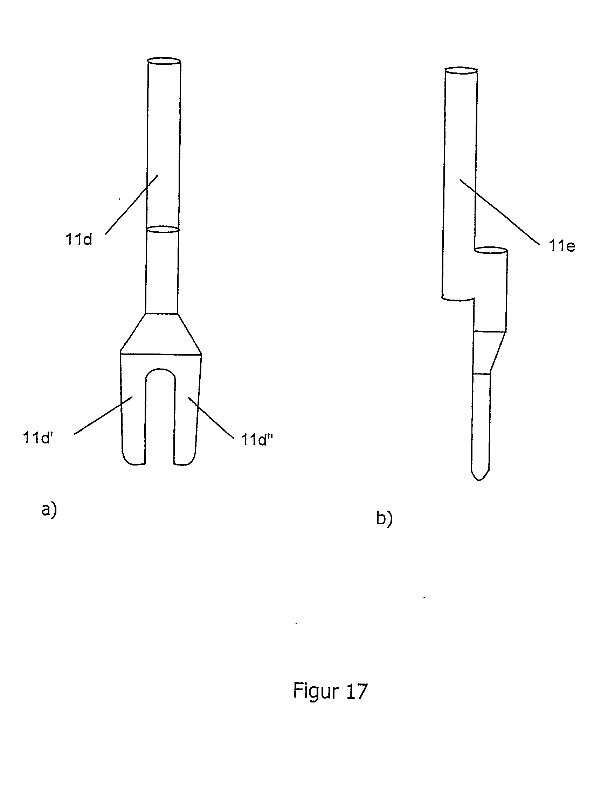

Fig. 17 zeigt beispielhaft Spreizstifte 11d und 11e, die in der Ausführungsform, die in Fig. 16 dargestellt ist, verwendet werden können. Grundsätzlich können die dargestellten Spreizstifte jedoch auch bei den Ausführungsformen der Erfindung mit Spreizzange verwendet werden. Während es sich beim Spreizstift 11e um einen singulären Spreizstift handelt, handelt es sich beim Spreizstift 11d um einen gabelförmigen Spreizstift 11d. Dieser weist in seinem Wirkbereich zwei Arme 11d' und 11d" auf, die im Wesentlichen dieselbe Funktion wie ein separates Spreizstiftepaar ausüben können. Die gabelförmige Ausgestaltung des Sprelzstiftes 11d hat den Vorteil, dass beide Spreitzstiftarme 11d' und 11d" in einem Konstruktionsschritt an einem Bereich 10 bzw. 9 des Bügels 33 oder des Schlittens 34 befestigt werden können. Der singuläre Spreizstift 11e ist im gezeigten Beispiel in einer gewinkelten Ausführungsform vorgesehen. Dabei handelt es sich jedoch nur um eine von mehreren Möglichkeiten, die konkrete Ausgestaltung des Spreizstiftes kann selbstverständlich an das jeweils verwendete Spreizinstrument angepasst werden.

Im Folgenden wird noch einmal detailliert beschrieben, auf welche Weise die oben beSchriebenen erfindungsgemäßen Spreizinstrumente von einem Behandler verwendet werden können. Das im Folgenden beschriebene Verfahren diend dabei der Illustrierung, es ist selbst nicht durch dieses Patent geschützt. Dabei wird das Beispiel anhand einer Spreizzange 1 mit einem singulären mittigen Spreizstift an einem Ende und einem Spreizstiftpaar an dem anderen Ende des Zangenkopfes 6 beschrieben;

Bei der klinischen Vorgehensweise wird nach Kariesentfernung und Fertigstellung der Kavitätenpräparation an den zu versorgenden Zahn nach bekannten Prinzipien eine Voll - oder Teilmatrize 24 adaptiert. In der Regel kommt eine sog. Tofflemirematrize mit einer gleichnamigen Spannvorrichtung 25 zur Anwendung, die den Zahn 26 durch ein gespanntes Edelstahlband vollständig umschlingt. Anschließend empfiehlt sich entsprechend der nachfolgenden Anwendungsrichtlinien die Einprobe der Spreizzange 1:
- Die Zange 1 wird -analog einer Extraktionszange- horizontal von der Wangenseite in die Mundhöhle eingebracht, über dem zu restaurierenden Zahn 26 platziert und mit ihren endseitig am Zangenkopf 6 angebrachten Spreizstiften 11a, 11b, 11c in den approximalen Kasten eingesenkt.
- Dabei kann durch Drehung um ihre Längsachse die Zange 1 bei jeder Kavität wahlweise so in den Defekt eingebracht werden, dass entweder der mittige 11a oder die paarigen Spreizstifte 11b, 11 c der Matrize 24 zugewandt werden. Es spielt somit keine Rolle, ob eine mesial-okklusale (mo-), okklusal-distale (od-) oder kombinierte (mod-) Defektgeometrie am Ober- oder am Unterkiefer versorgt werden muss.
- Approximale Prämolarenkontakte sind kleinflächiger als die in bukko-lingualer Richtung ausgedehnteren, bevorzugt ovalen Approximalkontakte der grossen Backenzähne (Molaren). Entsprechend wird bei kleinen Defekten in der Regel der mittige Sprelz-stift 11a an der Innenfläche der Matrize 24 und das Stiftpaar 11b, 11c an der Schulter 23 des approximalen Kastens abgestützt. Umgekehrt werden bei größeren Molarendefekten bevorzugt die Doppelstifte 11b, 11 c der Matrize 24 und damit dem Nachbarzahn 20 zugewandt, um eine bukko-lingual flächige Ausformung der Matrize 24 und damit eine breitere Kontaktbeziehung zu erreichen.
- Wo immer aus Platzgründen möglich, werden auf die Spreizstifte 11a, 11 b, 11c - bevorzugt der Matrize 24 zugewandt - Schlauchhülsen 18, 18' aufgesteckt. Die unter Druck adaptierbaren Hülsen 18, 18' vergrößern die Auflagefläche der Spreizstifte 11a, 11 b, 11 c und damit die Breite der erzielbaren approximalen Kontaktbeziehung. Zusätzlich wird eine Einkerbung der Matrize 24 bei der Kraftübertragung auf den Nachbarzahn 20 vermieden. Somit kann die Zange 1 durch eine auf die klinische Situation abgestimmte Platzierung der Spreizstifte 11a, 1b, 11 c und durch deren optionale Bestückung mit Schlauchhülsen 18, 18' für das gesamte Spektrum von minimalinvasiven bis hin zu großen approximalen Substanzdefekten genutzt werden.
- Als Widerlager für die Abstützung des/der von der Matrize 24 abgewandten Spreizstifte/s 11a, 11 b, 11 c dient die approximale Kastenschulter 23. Dies ermöglicht die Anwendung der Zange 1 auch bei Approximaldefekten an innerhalb der Zahnreihe endständigen Molaren.
- Beliebige, besonders große Kavitäten werden durch das vorangehende Einbringen selektiver Kunststoffinkremente 27 nach bekannten Verfahrensregeln im Bereich der Defektflanken bzw. im Kavitätenzentrum "vormodelliert" und so in eine gängige "mo-, od-oder mod-" Defektgeometrie überführt. Dadurch wird im Falle okklusal tief ausgedehnter Defekte eine Kastenschulter zur Abstützung der Spreizzange geschaffen (s.o.). Bukkale und/oder linguale Wanddefekte werden in Richtung des Approximalbereichs 21 vorangehend verkleinert, um die anschließende Verfüllung des approximalen Kastens unter dem Spreizdruck der Zange 1 zu stabilisieren. Hierfür wird zusätzlich ein Platzhalter in Form eines analog zur Dreieckskontur der geschlossenen Zangenspitze gestalteten Modellierinstrumentes vorgeschlagen, der sicherstellt, dass die Zange nach der Aushärtung dieser Inkremente störungsfrei in die verbleibende Approximalkavität passt.

Nach Einprobe der Zange 1 und Festlegung einer Strategie zur Restauration des Zahndefektes entsprechend den vorgenannten Kriterien erfolgt die Konditionierung der Zahnhartsubstanz durch adäquate Säureätzung und Benetzung durch ein flüssiges Adhäsiv mit anschließender Lichtpolymerisation.

Mit Ausnahme besonders kleiner Defekte wird die approximale Kavität mit einer ersten dünnen Schicht aus fließfähigem Komposit beschickt, um mittels einer zahnärztlichen Sonde den basalen, den zentralen und die randständigen Bereiche des Defektes (entsprechend den Kastenboden, die Kastenschulter und die Kastenwände) blasenfrei zu benetzen. Nach Aushärtung dieser ersten Schicht wird mit einem zweiten Inkrement bevorzugt fließfähigen Füllungskunststoffes der approximale Kasten bis knapp unter das Niveau des zu schaffenden Approximalkontaktes befüllt, wobei insbesondere auch die Matrize 24 flächig benetzt wird. Die Zange 1 wird bis auf den Kastenboden in das unpolymerisierte Komposit eingesenkt, wobei die Spreizstifte 11a, 11b, 11 c unter Sichtkontrolle an der Innenfläche der Matrize 24 sowie der gegenüberliegenden Kastenschulter 23 abgestützt werden. Sofern aus Platzgründen keine Schlauchhülsen 18, 18' verwendet werden, verhindert die Aufrauung der planen Außenflächen der Spreizstifte 11a, 11b, 11 c ein Abrutschen der Spreizstifte 11 a, 11 b, 11 c. Durch manuellen Druck auf die Zangengriffe 2, 3 wird die erwünschte Auseinanderdrängung der benachbarten Zahnstrukturen 20, 26 bewirkt. Gleichzeitig wird durch den/die approximal positionierten Spreizstift(e) 11 a, 11 b, 11 c die zwischengelagerte Matrize 24 im innigen Kontakt an den Nachbarzahn 20 angepresst. Die zähplastischen Schlauchhülsen 18, 18' adaptieren sich dabei unter dem angewandten Druck flächig an die Innenseite der Matrize ohne diese einzukerben.

Die resultierende, summierte Auslenkung der verdrängten Zähne 20, 26 -gemessen auf der Höhe des Approximalkontaktes 21 - muss dabei im Falle einer Tofflemirematrize 24(d.h. einer Vollmatrize) mindestens der doppelten, bei Anwendung einer Teilmatrize mindestens der einfachen Matrizenstärke entsprechen. Unter Beibehaltung des Zangendrucks wird das eingebrachte Kunstoffinkrement durch seitliche Belichtung mit der Polymerisationslampe ausgehärtet. Die von den zweifach abgewinkelten Zangenbranchen 7, 8 umgrenzte Öffnung 17 ermöglicht hierfür neben dem zungenseitigen auch einen wangenseitigen, möglichst unmittelbaren Zugang für den Lichtleiter der Polymerisationslampe. Die Transparenz der Schlauchhülsen 18, 18' gewährleistet dabei eine optimale Lichtdiffusion zum umgebenden Kunststoff. Nach Entnahme der Spreizzange 1 (und eventuell separater Entfernung der Schlauchhülsen 18, 18') wird das eingebrachte Komposit nachbelichtet, sodass es nun den approximalen Defektbereich hinreichend stabil vorkonturiert, um dem Gegendruck des Nachbarzahnes 20 standzuhalten. Dies wird insbesondere durch einen schmalen, ausgehärteten Kunststoffsteg gewährleistet, der mittig zwischen den paarigen Spreizstiften verbleibt und die Kavität verstrebt. Durch gegebenenfalls portionsweise Verfüllung des von den Spreizstiften 11a, 11b, 11 c beanspruchten Hohlraumes mit hochviskösem, modellierbarem Füllungskomposit wird die Restauration im Approximalbereich vervollständigt und endgültig stabilisiert.

Mit Entfernung der Matrize können sich die ausgelenkten Zähne 20, 26 vollständig in ihre physiologische Ausgangsposition rückstellen und damit den erwünschten innigen Kontakt zur restaurierten approximalen Defektfläche einnehmen. Abschließend wird die Restauration in ihren okklusalen Anteilen vervollständigt und die Füllung nach gängigen Verfahrensregeln fertig gestellt.

Das erfindungsgemäße zahnärztliche Spreizinstrument ermöglicht erstmals ein optimiertes reproduzierbares Herstellen eines Approximalkontaktes im Rahmen der Anfertigung einer Seitenzahnrestauration, wobei ein sehr stabiler Kontakt - insbesondere unter Verwendung eines präfabrizierten Formkörpers - hergestellt und Verletzungen und Blutungen der Zahnfleischpapille bei der Seitenzahnrestauration erfolgreich vermieden werden können.

### Bezugszeichenliste

- 1: Spreizinstrument; Zange
- 2: Griff
- 3: Griff
- 4: Federelement
- 5: Gelenk
- 6: Zangenkopf
- 7: Branche
- 8: Branche
- 9: Bereich/Ende des Spreizinstrumentes
- 10: Bereich/Ende des Spreizinstrumentes
- 11: Spreizstift
- 12: Einkerbung
- 13: Vorsprung
- 14: Vorsprung
- 15: konisch zulaufender Bereich
- 16: Schlauchhülse
- 17: Öffnung für Lichtleiter
- 18: Schlauchhülse
- 19: benachbarter Zahn
- 20: benachbarter Zahn
- 21: Approximalkontakt
- 22: approximaler Kasten der Kavität
- 23: Kastenschulter
- 24: Matrize
- 25: Spannmechanik
- 26: zu behandelnder Zahn
- 27: Füllmaterial
- 28: Formkörper
- 29: Aussparung des Formkörpers
- 30: Außenseite des Formkörpers
- 31: Bohrung durch den Formkörper
- 32: Platzhalter
- 33: Bügel
- 34: Schlitten
- 35: Betätigungsschraube
- 36: punktierte Linie

## Patentansprüche

1. Zahnärztliches Spreizinstrument (1, 1a), insbesondere zahnärztliche Zange (1,1a), zum Auseinanderdrängen benachbarter Zahnstrukturen (20, 26) im Rahmen einer Schaffung eines Approximalkontaktes (21) bei einer Anfertigung einer plastischen Seitenzahnrestauration,
wobei das Spreizinstrument (1) einen ersten und einen zweiten Bereich (9, 10) umfasst, wobei der erste Bereich (9) einen Spreizstift (11 a) aufweist,
**dadurch gekennzeichnet, dass**
der zweite Bereich (10) zwei Spreizstifte (11 b, 11c) aufweist, wobei der zweite Bereich (10) mindestens einen Spreizstift mehr als der erste Bereich (9) aufweist, so dass benachbarte Zahnstrukturen (20, 26) durch die Spreizstifte (11a, 11b, 11c) bei einer Betätigung des
Spreizinstrumentes (1) auseinandergedrängt werden können, und wobei eine korrekte approximale Kontaktbeziehung geschaffen werden kann.

2. Zahnärztliches Spreizinstrument gemäß Anspruch 1, wobei das Spreizinstrument eine Zange (1, 1a) mit einem Griff (2, 3), einem Gelenk (5) und einem Zangenkopf 6) umfasst, an dem die Spreizstifte (11a, 11b, 11c) angebracht sind.

3. Zahnärztliches Spreizinstrument (1) gemäß einem der vorangehenden Ansprüche, wobei das Spreizinstrument (1) in einer Arbeitsebene betätigbar ist und wobei die Spreizstifte (11 a, 11 b, 11 c) gewinkelt, insbesondere senkrecht, zu dieser Arbeitsebene ausgerichtet sind.

4. Zahnärztliches Spreizinstrument (1) gemäß dem vorangehenden Anspruch, wobei die Spreizstifte (11a, 11 b, 11 c) über die Arbeitsebene hinausragen.

5. Zahnärztliches Spreizinstrument (1) gemäß dem vorangehenden Anspruch, wobei die Spreizstifte (11a, 11b, 11c) über die Arbeitsebene auf beiden Seiten hinausragen.

6. Zahnärztliches Spreizinstrument (1) gemäß Anspruch 2, wobei der Zangenkopf (6) zwei Branchen (7, 8) aufweist, die so geformt sind, dass sie bei geschlossenem Zangenkopf (6) eine Öffnung (17) begrenzen, die so dimensioniert ist, dass ein Lichtleiter einer Polymerisationslampe durch die Öffnung (17) hindurchführbar ist.

7. Zahnärztliches Spreizinstrument (1) gemäß Anspruch 2 mit einem Federelement (4) am Griff (2, 3) der Zange (1), so dass in einem Ruhezustand des Spreizinstrumentes (1) der Griff (2, 3) geöffnet und der Zangenkopf (6) geschlossen ist.

8. Zahnärztliches Spreizinstrument (1) gemäß Anspruch 1 mit einem Bügel (33) und mit einem Schlitten (34), an denen der bzw. die Spreizstifte (11a, 11b, 11c) befestigt sind, wobei eine relative Position zwischen dem Bügel (33) und dem Schlitten (34) und damit zwischen den Spreizstiften (11a, 11b, 11c) durch ein Verfahren des Schlittens (34) einstellbar ist.

9. Zahnärztliches Spreizinstrument (1) gemäß einem der vorangehenden Ansprüche, wobei wenigstens einer der Spreizstifte (11a, 11b, 11c) mit einer Schlauchhülse (18, 18') umhüllt oder umhüllbar ist.

10. Zahnärztliches Spreizinstrument (1) gemäß dem vorangehenden Anspruch, wobei die mindestens eine Schlauchhülse (18, 18') transparent ist.

11. Zahnärztliches Spreizinstrument gemäß einem der vorangehenden Ansprüche, wobei die Spreizstifte (11a, 11b, 11 c) so angeordnet sind, dass in ungespreiztem Zustand des Spreizinstrumentes (1, 1 a) die Spreizstifte (11a, 11b, 11c, 11d) parallel zueinander und in einer Reihe liegend angeordnet sind.

12. Zahnärztliches Spreizinstrument (7) gemäß einem der vorangehenden Ansprüche mit einem Formkörper (28) zur Ausbildung eines Bereiches eines Approximalkontaktes (21) bei einer Seitenzahnrestauration, der an wenigstens einem der Spreizstifte (11 a, 1 b, 11 c) befestigbar oder befestigt ist.

13. Zahnärztliches Spreizinstrument (1,1a) gemäß dem vorangehenden Anspruch, wobei der Formkörper (28) auf zwei Spreizstifte (11b, 11 c) aufschiebbar oder aufgeschoben ist.

14. Zahnärztliches Spreizinstrument (1) gemäß einem der vorangehenden Ansprüche, wobei der erste Bereich (9) exakt einen Spreizstift (11a) und der zweite Bereich (10) exakt zwei Spreizstifte (11b, 11 c) aufweist.

15. System, umfassend:
ein zahnärztliches Spreizinstrument (1,1a) gemäß einem der Ansprüche 1 bis 14; und
eine Matrize (24) zur Bildung einer dichten und formgebenden Wandung im Approximalraum.

## Claims

1. Dental spreading instrument (1, 1 a), in particular dental forceps (1, 1 a), for forcing apart neighbouring tooth structures (20, 26) in the context of creating an approximal contact (21) when preparing a plastic restoration for the posterior teeth,
wherein the spreading instrument (1) comprises a first area (9) and a second area (10), wherein the first area (9) has a spreading pin (11a), **characterized in that**
the second area (10) has two spreading pins (11b, 11c), wherein the second area (10) has at least one spreading pin more than the first area (9), such that neighbouring tooth structures (20, 26) can be forced apart by the spreading pins (11a, 11 b, 11 c) upon actuation of the spreading instrument (1), and wherein a correct approximal contact relationship can be created.

2. Dental spreading instrument according to Claim 1, wherein the spreading instrument comprises forceps (1, 1a) with a handle (2, 3), with a joint (5), and with a forceps head (6), on which the spreading pins (11a, 11b, 11c) are mounted.

3. Dental spreading instrument (1) according to one of the preceding claims, wherein the spreading instrument (1) can be actuated in a working plane, and wherein the spreading pins (11 a, 11 b, 11c) are oriented at an angle, in particular perpendicularly, with respect to this working plane.

4. Dental spreading instrument (1) according to the preceding claim, wherein the spreading pins (11a, 11 b, 11c) protrude above the working plane.

5. Dental spreading instrument (1) according to the preceding claim, wherein the spreading pins (11a, 11 b, 11c) protrude above the working plane on both sides.

6. Dental spreading instrument (1) according to Claim 2, wherein the forceps head (6) has two branches (7, 8) which are shaped in such a way that, when the forceps head (6) is closed, they delimit an opening (17) which is dimensioned such that a light guide of a polymerization lamp can be guided through the opening (17).

7. Dental spreading instrument (1) according to Claim 2, with a spring element (4) on the handle (2, 3) of the forceps (1), such that, when the spreading instrument (1) is in a rest state, the handle (2, 3) is opened and the forceps head (6) closed.

8. Dental spreading instrument (1) according to Claim 1, with a frame (33) and with a carriage (34) on which the one or more spreading pins (11 a, 11 b, 11 c) are secured, wherein a relative position between the frame (33) and the carriage (34), and therefore between the spreading pins (11 a, 11b, 11 c), can be adjusted by a movement of the carriage (34).

9. Dental spreading instrument (1) according to one of the preceding claims, wherein at least one of the spreading pins (11 a, 11 b, 11 c) is enclosed, or can be enclosed, by a tubular sleeve (18, 18').

10. Dental spreading instrument (1) according to the preceding claim, wherein the at least one tubular sleeve (18, 18') is transparent.

11. Dental spreading instrument according to one of the preceding claims, wherein the spreading pins (11 a, 11 b, 11 c) are arranged such that, in the unspread state of the spreading instrument (1, 1 a), the spreading pins (11 a, 11b, 11c, 11 d) are arranged parallel to one another, lying in a row.

12. Dental spreading instrument (1) according to one of the preceding claims, with a shaped body (28) for forming an area of an approximal contact (21) in a restoration for the posterior teeth, which shaped body (28) can be secured, or is secured, on at least one of the spreading pins (11 a, 11 b, 11 c).

13. Dental spreading instrument (1,1a) according to the preceding claim, wherein the shaped body (28) can be pushed, or is pushed, onto two spreading pins (11b, 11 c).

14. Dental spreading instrument (1) according to one of the preceding claims, wherein the first area (9) has exactly one spreading pin (11a), and the second area (10) has exactly two spreading pins (11b, 11c).

15. System comprising:
a dental spreading instrument (1, 1a) according to one of Claims 1 to 14; and
a mould (24) for forming a leaktight and shaping wall in the approximal space.

## Revendications

1. Instrument écarteur dentaire (1, 1 a), en particulier pince dentaire (1, 1 a), pour écarter des structures de dent voisines (20, 26) dans le cadre de la création d'un contact proximal (21) lors de la réalisation d'une restauration dentaire latérale plastique, dans lequel l'instrument écarteur (1) comprend une première et une deuxième zones (9, 10), dans lequel la première zone (9) présente une tige d'écartement (11a), **caractérisé en ce que** la deuxième zone (10) présente deux tiges d'écartement (11b, 11c), dans lequel la deuxième zone (10) présente au moins une tige d'écartement de plus que la première zone (9), de telle manière que des structures de dent voisines (20, 26) puissent être écartées l'une de l'autre par les tiges d'écartement (11a, 11 b, 11 c) lors d'un actionnement de l'instrument écarteur (1), et dans lequel une relation de contact proximal correcte peut être créée.

2. Instrument écarteur dentaire selon la revendication 1, dans lequel l'instrument écarteur comprend une pince (1, 1a) avec une poignée (2, 3), une articulation (5) et une tête de pince (6), sur laquelle les tiges d'écartement (11 a, 11 b, 11 c) sont placées.

3. Instrument écarteur dentaire (1) selon l'une quelconque des revendications précédentes, dans lequel l'instrument écarteur (1) peut être actionné dans un plan de travail et dans lequel les tiges d'écartement (11a, 11 b, 11 c) sont coudées, en particulier perpendiculaires, par rapport à ce plan de travail.

4. Instrument écarteur dentaire (1) selon la revendication précédente, dans lequel les tiges d'écartement (11 a, 11 b, 11 c) sont saillantes au-delà du plan de travail.

5. Instrument écarteur dentaire (1) selon la revendication précédente, dans lequel les tiges d'écartement (11a, 11 b, 11 c) sont saillantes de part et d'autre au-delà du plan de travail.

6. Instrument écarteur dentaire (1) selon la revendication 2, dans lequel la tête de pince (6) présente deux branches (7, 8), qui sont formées de telle manière que, lorsque la tête de pince (6) est fermée, elles délimitent une ouverture (17), qui est dimensionnée de telle manière qu'une fibre optique d'une lampe de polymérisation puisse être introduite à travers l'ouverture (17).

7. Instrument écarteur dentaire (1) selon la revendication 2, avec un élément de ressort (4) sur la poignée (2, 3) de la pince (1), de telle manière que, dans un état de repos de l'instrument écarteur (1), la poignée (2, 3) soit ouverte et que la tête de pince (6) soit fermée.

8. Instrument écarteur dentaire (1) selon la revendication 1, avec un étrier (33) et avec un curseur (34), sur lesquels la ou les tige(s) d'écartement (11 a, 11b, 11 c) est/sont fixées, dans lequel une position relative entre l'étrier (33) et le curseur (34), donc entre les tiges d'écartement (11 a, 11 b, 11 c), peut être réglée par un déplacement du curseur (34).

9. Instrument écarteur dentaire (1) selon l'une quelconque des revendications précédentes, dans lequel au moins une des tiges d'écartement (11 a, 11b, 11 c) est ou peut être enveloppée par une gaine souple (18, 18').

10. Instrument écarteur dentaire (1) selon la revendication précédente, dans lequel ladite au moins une gaine souple (18, 18') est transparente.

11. Instrument écarteur dentaire selon l'une quelconque des revendications précédentes, dans lequel les tiges d'écartement (11 a, 11 b, 11 c) sont disposées de telle manière que, dans l'état non écarté de l'instrument écarteur (1, 1 a), les tiges d'écartement (11 a, 11 b, 11 c, 11 d) soient disposées parallèlement l'une à l'autre et disposées en une rangée.

12. Instrument écarteur dentaire (1) selon l'une quelconque des revendications précédentes, avec un corps de forme (28) destiné à former une zone d'un contact proximal (21) lors d'une restauration dentaire latérale, qui est ou qui peut être fixé à au moins une des tiges d'écartement (11 a, 11 b, 11 c).

13. Instrument écarteur dentaire (1, 1a) selon la revendication précédente, dans lequel le corps de forme (28) est ou peut être engagé sur deux tiges d'écartement (11 b, 11 c).

14. Instrument écarteur dentaire (1) selon l'une quelconque des revendications précédentes, dans lequel la première zone (9) présente exactement une tige d'écartement (11 a) et la deuxième zone (10) présente exactement deux tiges d'écartement (11 b, 11 c).

15. Système, comprenant un instrument écarteur dentaire (1, 1a) selon l'une quelconque des revendications 1 à 14; et une matrice (24) pour la formation d'une paroi étanche et bien formée dans l'espace proximal.
